# FASCICULE DE BREVET EUROPEEN

(11) **EP 4 399 272 B1**
(45) Date de publication et mention de la délivrance du brevet: **25.03.2026**
(21) Numéro de dépôt: 22783536.0
(22) Date de dépôt: 09.09.2022
(51) Int. Cl.: C12H 3/00, C12H 3/04

(54) **PROCEDE DE DESALCOOLISATION D'UN VIN**
VERFAHREN ZUR ENTALKOHOLISIERUNG EINES WEINS
METHOD FOR DEALCOHOLIZATION OF A WINE

(30) Priorité: 10.09.2021 FR 2109534
(43) Date de publication de la demande: 17.07.2024
(73) Titulaire: M H C S, 51200 EPERNAY (FR)
(72) Inventeur: LITOUX-DESRUES, François, 33170 GRADIGNAN (FR); LEARMONTH, Robert, Spring Gully, Victoria 3550 (AU)
(74) Mandataire: Regimbeau
(86) Numéro de dépôt international: PCT/FR2022/051704
(87) Numéro de publication internationale: WO 2023/037080

(56) Documents cités:
- EP-A1- 3 550 007
- EP-A1- 3 828 256
- WO-A2-2011/088809
- WO-A2-90/01537
- US-A1- 2007 039 882
- US-A1- 2008 272 041
- MORALES PILAR ET AL: "The impact of oxygen on the final alcohol content of wine fermented by a mixed starter culture", APPLIED MICROBIOLOGY AND BIOTECHNOLOGY, SPRINGER BERLIN HEIDELBERG, BERLIN/HEIDELBERG, vol. 99, no. 9, 13 January 2015 (2015-01-13), pages 3993 - 4003, XP035482658, ISSN: 0175-7598, [retrieved on 20150113], DOI: 10.1007/S00253-014-6321-3

## Description

### DOMAINE DE L'INVENTION

La présente invention concerne un procédé permettant de réduire la quantité d'alcool présente dans un vin, sans modifier significativement les propriétés organoleptiques dudit vin, à l'origine de ses qualités gustatives.

### ETAT DE LA TECHNIQUE

Depuis bientôt un siècle, on recherche à abaisser le taux d'alcool de certaines boissons alcoolisées, en particulier de la bière et plus récemment du vin, voire à éliminer totalement l'alcool de ces boissons.

Pour de multiples raisons, il peut être souhaitable d'abaisser le degré d'alcool de certaines boissons alcoolisées. L'une des principales raisons tient aux recommandations de santé publique de limiter la consommation d'alcool. En outre, les habitudes de consommation récentes, de plus en plus suivies, s'orientent vers une consommation responsable, permettant d'allier convivialité et plaisir. Enfin, du fait du réchauffement climatique, les raisins récoltés à maturité présentent des taux de sucre de plus en plus importants, et ainsi leur fermentation conduit à des vins présentant des taux d'alcool significativement augmentés.

Depuis quelques années, de plus en plus de boissons alcoolisées élaborées de manière traditionnelle ont vu apparaitre un « équivalent » présentant un taux d'alcool plus faible ou ne contenant pas, ou quasiment pas, d'alcool, constituant ainsi un nouveau segment de produits. Obtenir un tel équivalent est un défi technique, d'autant plus important que l'objectif est d'abaisser fortement le degré d'alcool et offrir une expérience gustative la plus qualitative possible lors de la dégustation.

On connaît de l'état de la technique plusieurs stratégies pour obtenir des boissons à faible taux d'alcool, voire présentant un taux d'alcool nul.

On distingue deux stratégies principales :
- L'une consistant à limiter la production d'alcool avant ou pendant la phase fermentaire, en agissant soit sur les matières premières utilisées, soit sur le déroulement de la fermentation, en utilisant des levures produisant peu d'alcool ;
- L'autre consistant à agir sur la boisson alcoolisée une fois son processus d'élaboration achevé (approche en « post-fermentation »), pour diminuer son taux d'alcool en transformant ou en extrayant l'alcool présent dans cette boisson dite « finie ».

Pour la mise en œuvre de la première stratégie, plusieurs méthodes peuvent être employées. En particulier, pour un vin, lorsque l'alcool est produit progressivement dans le moût par la consommation du sucre issu du raisin par les levures, il est possible d'agir à plusieurs niveaux à ce stade de la fermentation pour diminuer la production d'alcool. Quelques exemples sont notamment décrits dans les documents suivants :
- Le brevet FR2852493 décrit une méthode de désucrage partiel des jus ;
- Le brevet FR2887258 décrit l'utilisation de levures génétiquement transformées pour produire moins d'alcool ;
- La demande internationale WO 2015/114115 est relative à l'utilisation de levures préalablement stressées pour produire moins d'alcool ;
- Le brevet US 5,266,337 de Barwäld et al. propose un procédé dans lequel le rendement du processus de fermentation alcoolique est diminué lors de la phase anaérobique de production d'éthanol, puis le taux d'éthanol est réduit lors d'une seconde étape de la même fermentation mais en conditions d'aérobie ;
- L'article (Morales *et al.,* 2015) décrit une méthode de fermentation d'un moût de raisins, permettant de réduire le taux d'alcool final, basée sur l'utilisation d'une culture mixte de levures, et le contrôle du niveau d'oxygénation. Il y est démontré que plus le pourcentage d'alcool est diminué, plus la production d'acide, notamment d'acide acétique, augmente. Cette méthode ne permet donc pas d'obtenir une diminution significative du pourcentage d'alcool tout en conservant les propriétés gustatives du vin.

La seconde stratégie dite en post-fermentation met en œuvre un ensemble de méthodes telles que :
(i) des méthodes séparatives, en particulier des méthodes membranaires,
(ii) des méthodes thermiques, telles que la distillation sous vide ou la colonne à cônes rotatifs,
(iii) des méthodes microbiologiques, ou encore
(iv) une combinaison de ces méthodes.

Parmi les méthodes séparatives, on peut citer la technique consistant à utiliser un composé ayant une affinité pour l'éthanol, tel qu'une enzyme, immobilisé sur une colonne : lors du passage de la boisson alcoolisée sur ladite colonne, l'éthanol est immobilisé et/ou transformé par ladite enzyme. Cette technique est décrite dans la demande internationale WO 90/01537. Elle nécessite pour sa mise en œuvre l'usage d'une colonne, qui selon la demanderesse n'est pas un dispositif couramment utilisé dans l'industrie pour la production des boissons alcoolisées à l'échelle industrielle, et en particulier dans celle du vin. De plus cette technique entraine une accumulation d'acétaldéhyde néfaste à la qualité gustative du vin. Cet acétaldéhyde devra, dans un deuxième temps, être éliminé à l'aide de méthodes non spécifiques, ne permettant pas de conserver les propriétés organoleptiques du vin final désalcoolisé.

Parmi les techniques séparatives membranaires, on peut citer notamment les contacteurs membranaires, l'ultrafiltration, la nanofiltration et l'osmose inverse qui sont bien connues de l'Homme du métier, et sont utilisées depuis de nombreuses années dans ce but afin de corriger de quelques degrés le taux d'alcool, le plus souvent pour des raisons de réglementation.

L'osmose inverse est la technique la plus utilisée pour réduire la teneur en alcool d'un vin, car elle peut être réalisée à basse température ce qui permet une meilleure conservation du goût du vin (Pickering, 2000).

La diafiltration, autre technique membranaire, est quant à elle bien connue des brasseurs de bière. Elle est utilisée afin de diminuer plus fortement le taux d'alcool dans un contexte bien différent de celui du vin, en particulier sur le plan de la réglementation. Cette technique, souvent suivie d'une dilution, impose l'apport d'eau exogène, en quantité d'autant plus importante que l'on veut diminuer le taux d'alcool, et la perte de l'eau endogène. Elle vise en effet à remplacer le volume d'alcool extrait par de l'eau exogène, ce qui permet de diminuer significativement le taux d'alcool jusqu'à être égal ou inférieur à 0,5% vol.

Il est donc possible de produire une bière ayant un taux d'alcool égal ou inférieur à 0,5% vol., mais avec une qualité qui laisse souvent à désirer, et ce d'autant plus que les méthodes employées permettent de n'obtenir qu'une bière peu aromatisée après l'élimination de l'alcool. Il est, par conséquent, nécessaire de la re-aromatiser à l'aide d'arôme exogène.

De plus, cette technique génère intrinsèquement un important volume de déchets.

Dans le domaine du vin, le recours à l'ajout d'eau exogène en tant qu'intrant de désalcoolisation est en général évité, ce qui rend plus compliqué d'atteindre un taux d'alcool inférieur à 0,5 % vol., comme cela est attendu pour un vin dit « sans alcool » selon la règlementation applicable de l'office international du vin (OIV).

Dans le domaine du vin, il est souhaitable de pouvoir disposer d'une technologie de désalcoolisation n'impliquant aucun composé exogène susceptible d'être considéré comme un « intrant de désalcoolisation », y compris lorsque l'on veut atteindre un taux d'alcool faible ou nul.

A l'exception de la diafiltration, les différentes techniques décrites ci-dessus ne permettent pas, à elles seules, de diminuer significativement la teneur en alcool de vins (de plus de 2% vol.), tout en conservant leurs propriétés organoleptiques (Varela, 2015).

C'est pourquoi différents couplages de ces techniques ont été mis en œuvre pour essayer d'atteindre ces objectifs de qualité et de rendement, en particulier les techniques séparatives et thermiques, sans pour autant y parvenir jusqu'à présent.

Par exemple, la demande de brevet US 2016/0326473 décrit un procédé de désalcoolisation de vin, où une première étape séparative permet de séparer un « rétentat » comprenant les composés d'intérêt, et un « perméat » qui est soumis à une distillation pour éliminer l'alcool concentré dans cette fraction.

Les méthodes dites « microbiologiques », lorsqu'elles sont appliquées à la boisson alcoolisée finie, sont quant à elles basées sur la métabolisation de l'éthanol en eau et CO₂ en conditions aérobies par des levures capables de réaliser cette transformation biochimique.

Ces méthodes consistent à orienter le métabolisme des levures vers la consommation d'une partie de l'alcool produit. Cette orientation d'un métabolisme fermentaire (plus précisément dit « respiro-fermentaire » consistant en la consommation de sucres et la production d'éthanol et de CO₂, en présence ou non d'oxygène) vers un métabolisme respiratoire (consommation d'alcool en présence d'oxygène uniquement) est appelée « transition diauxique ».

Ainsi, Bärwald et Fischer (1996) et Rodrigues et al. (2016) ont tous deux mentionné la possibilité d'opérer cette transition diauxique in situ à partir d'une phase fermentaire sur moût, et de « pousser » la respiration au-delà de l'épuisement total des sucres, puis de la poursuivre par la consommation de l'éthanol. Cette technologie présente les inconvénients d'altérer le bouquet aromatique, par l'oxydation des arômes et la synthèse d'acétaldéhyde.

La demande de brevet européen EP3550007 est relative à un procédé de désalcoolisation d'une boisson alcoolisée, comprenant l'ajout d'une levure non-Saccharomyces à ladite boisson, et la fermentation de cette boisson dans des conditions limitées en oxygène, afin de réduire le taux d'alcool présent. Les exemples présentés sont relatifs à la désalcoolisation de produits fermentés comprenant 5% vol. d'éthanol. Cet enseignement technique concerne un procédé adapté à la désalcoolisation de la bière, de titre alcoométrique volumique (TAV) initial faible et moins susceptible aux changements, en termes de propriétés organoleptiques, qu'un vin.

Ainsi, ces méthodes microbiologiques décrites dans l'état de la technique ne semblent être applicables que dans les cas de boissons présentant un taux d'alcool initial relativement faible (4% vol. dans Bärwald et Fischer (1996), 5% vol. dans Rodrigues et al. (2016) et dans EP3550007) et dans un milieu relativement riche en nutriments pour les levures comme un moût de raisins ou une bière.

Cette technique microbiologique présente d'une manière générale les inconvénients suivants :
- risque de générer une oxydation des arômes, à cause de la présence d'oxygène,
- risque de consommation des composés responsables des arômes et d'autres composés carbonés d'intérêt comme le glycérol ou l'acide lactique pour un vin, par les levures, en tant que substrat préférentiel, en lieu et place de l'éthanol, lesdits composés d'intérêt ayant un rôle important qui confère majoritairement à la boisson concernée ses caractéristiques organoleptiques,
- production de composés non souhaités car synonymes de défaut gustatif, notamment d'acétaldéhyde, par les levures.

Ainsi, la mise en œuvre de ce type de méthode microbiologique conduit de manière inévitable à une dégradation de certains composés d'intérêts modifiant les propriétés organoleptiques de la boisson alcoolisée.

Ces composés sont dits d'intérêt car ils conférent majoritairement les propriétés organoleptiques de ladite boisson, synonymes de qualité, tant au niveau des sensations en bouche (composés de structure) que ceux liées au bouquet (composés aromatiques).

C'est pourquoi là encore différents couplages de ces techniques séparatives, thermiques et/ou microbiologiques ont été aussi mis en œuvre pour essayer d'atteindre ces objectifs de qualité et de rendement, sans de nouveau y parvenir.

Il a été par exemple proposé dans la demande internationale WO 2011/088809 de combiner une méthode de séparation physique avec une méthode microbiologique.

Dans ce procédé, la méthode physique consiste à congeler la boisson alcoolisée, puis à soustraire la phase alcoolique, celle-ci étant restée liquide, ce qui correspond à une dilution par soustraction. La partie de la boisson congelée puis décongelée contient encore de l'alcool, mais à un taux faible : il est alors possible de procéder à une transformation de l'éthanol restant par ajout d'une levure de type Candida. Cette technique présente toutefois de nombreux inconvénients : perte des composés d'intérêt dissous dans la phase alcoolique, oxydation desdits composés d'intérêt dans la phase soumise à l'action des levures, et consommation du glycérol par les levures.

Ainsi, parmi les nombreuses techniques existantes, aucune d'entre elles, y compris lorsqu'elles sont combinées entre elles, ne permet d'obtenir une diminution significative du taux d'alcool de la boisson initiale en l'absence d'eau exogène et/ou de techniques souvent trop invasives, en particulier lorsqu'il est nécessaire de les mettre en œuvre un grand nombre de fois, et de limiter l'impact négatif de ces techniques sur les composés d'intérêts présents dans ladite boisson de manière appropriée pour aboutir au final à un produit le plus qualitatif possible et le plus respectueux possible des caractéristiques intrinsèques du produit d'origine.

Il existe donc un réel besoin de disposer d'un procédé mettant en œuvre des techniques permettant d'atteindre un taux d'alcool très faible ou nul tout en préservant de tels composés d'intérêt pour un résultat le plus qualitatif possible au niveau de la dégustation.

Ce maintien de la qualité gustative des boissons, notamment des vins, est souvent le problème technique le plus difficile à résoudre lors de la mise au point des procédés de désalcoolisation, car les composés d'intérêt, en particulier les composés aromatiques, sont soit éliminés avec l'alcool, soit dégradés par l'application d'un procédé incluant au moins une étape de chauffage ou d'oxydation.

Un autre inconvénient des technologies présentées ci-dessus est que la plupart nécessitent le plus souvent un ajout ultérieur d'additifs, une fois mises en œuvre les techniques de désalcoolisation précitées, afin de masquer certains goûts non souhaités, et/ou dans certains cas, pour aromatiser la boisson désalcoolisée ainsi obtenue.

Ainsi, à ce jour, les boissons désalcoolisées, notamment les vins, disponibles sur le marché ont souvent l'inconvénient de présenter des notes aromatiques de type végétal, plastique ou fruits cuits, confiture. Certains présentent des notes caractéristiques d'arômes artificiels (pêche, abricot, fraise...). Les bouches sont souvent construites sur le sucre au détriment de la finesse et de l'équilibre. Ces goûts sont en général rejetés par le consommateur car inhabituels ou absents de leurs équivalents alcoolisés, soit par ce qu'ils résultent des techniques de désalcoolisation utilisées (oxydation, chaleur, forte dilution), soit parce que des arômes artificiels ont été ajoutés. Ces goûts sont souvent peu appréciés par les consommateurs à la recherche de produits de qualité.

Il existe donc un besoin d'une solution technique de désalcoolisation plus respectueuse du vin à désalcooliser, permettant d'atteindre des taux d'alcool faible ou nul tout en préservant autant que possible les composés d'intérêts du vin initial afin de pouvoir obtenir un vin désalcoolisé de qualité, susceptible de répondre aux attentes des consommateurs en recherche de plaisir gustatif.

Il existe également un besoin d'une solution technique encore plus exigeante en matière de cahier des charges, à l'instar de ceux prévus par les appellations d'origine protégées (AOP), limitant ou interdisant le recours à des intrants de désalcoolisation externes au vin de départ, comme l'eau exogène, afin d'être le plus fidèle possible à la typicité et aux caractéristiques intrinsèques du vin initial.

Enfin, il existe un besoin de procédé plus naturel et respectueux de l'environnement, notamment en réduisant les déchets générés par l'industrie du vin. Lors de la mise en oeuvre des procédés de désalcoolisation décrits précédemment, l'usage répétitif d'eau exogène génère des quantités très importantes de sous-produits liquides non réutilisables et/ou non recyclables, qui sont donc jetés. Or, les recommandations actuelles sont de limiter la quantité de déchets générés, en particulier la quantité de déchets liquides. Il est également désirable de limiter le recours à des dispositifs supplémentaires dont la fabrication serait rendue nécessaire par un procédé spécifique.

### BREF EXPOSE DE L'INVENTION

La présente invention concerne un procédé de désalcoolisation partielle ou totale d'un vin, permettant d'obtenir un vin désalcoolisé dans lequel les composés d'intérêts (notamment les composés aromatiques) présents initialement sont non seulement conservés mais également préservés (non dénaturés), en particulier de l'oxydation, et éventuellement d'une température excessive liée à une étape de chauffage. Ces composés sont en premier lieu isolés de manière appropriée, et les techniques mises en œuvre pour éliminer l'alcool présent sont les plus respectueuses de ces derniers. Ces composés d'intérêt restent ainsi présents dans le vin partiellement ou totalement désalcoolisé.

Ce procédé est basé sur la combinaison d'une étape de séparation physique par membrane, et d'une étape de microbiologie appliquée à l'une des fractions obtenues lors de ladite première étape de séparation physique.

La méthode séparative membranaire permet de séparer les deux fractions suivantes :
i. Une fraction concentrée dite « rétentat » comprenant tous les composés d'intérêt du vin, à savoir de l'eau, de l'alcool, du glycérol, des acides organiques, des sucres, des polyphénols et des composés aromatiques ; et
ii. Une fraction dite « perméat » comprenant majoritairement de l'eau et de l'éthanol. Ces composés d'intérêt sont ainsi en premier lieu isolés de manière appropriée, et les techniques mises en œuvre pour éliminer l'alcool présent dans les deux phases sont respectueuses desdits composés. Ces composés d'intérêt sont donc préservés dans le vin partiellement ou totalement désalcoolisé.

Plus précisément, la présente invention est relative à un procédé de désalcoolisation d'un volume V1 de vin de présentant un titre alcoométrique volumique (TAV) de valeur TAV (1), comprenant la mise en œuvre des étapes suivantes :
a) Séparation du volume V1 du vin en deux fractions à l'aide d'une méthode séparative membranaire :
   - Une fraction concentrée d'un facteur k dite « rétentat », le volume de cette fraction étant égal à 1/k V1, cette fraction ayant une valeur de TAV(R) ;
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) Optionnellement, diafiltration du rétentat avec du perméat métabolisé, pour obtenir :
   - un « rétentat diafiltré » ayant une valeur de TAV (R diafiltré) inférieure à TAV (R), et
   - un « perméat métabolisé diafiltré » ayant une valeur de TAV supérieure à TAV (P métabolisé), ledit perméat métabolisé diafiltré étant ensuite optionnellement resoumis à l'étape (b) ;
d) Association d'un volume de rétentat, optionnellement diafiltré, et d'un volume de perméat métabolisé, pour obtenir un volume V2 de vin désalcoolisé, présentant une valeur de TAV (2) inférieure à TAV (1).

L'étape de microbiologie (b) est basée sur l'addition de levures dans le perméat, lesdites levures étant capables de métaboliser l'éthanol par respiration, en conditions aérobies limitées c'est-à-dire en présence de faibles quantités d'oxygène.

Avantageusement, cette étape permet de transformer tout ou partie de l'éthanol présent dans le perméat, sans avoir recours à des techniques séparatives et/ou thermiques aux multiples inconvénients précités.

Avantageusement, cette étape microbiologique ne produit aucun déchet, hormis du dioxyde de carbone et la biomasse des levures, ces résidus pouvant être revalorisés ultérieurement. Par exemple, le dioxyde de carbone produit peut être récolté et ré-utilisé par la suite, notamment pour (re)gazéifier des boissons, en particulier des vins, préalablement désalcoolisés.

Ce procédé de désalcoolisation peut être qualifié de procédé « de qualité » dans la mesure où il permet de préserver au mieux les composés d'intérêt et tout particulièrement les arômes du vin initial, et ainsi d'obtenir un vin désalcoolisé présentant un goût satisfaisant, qui ne nécessite pas l'ajout d'arômes artificiels ni d'exhausteurs de goût.

A l'issue de la mise en œuvre du procédé selon l'invention, le profil organoleptique du vin désalcoolisé est proche de celui du vin initial, de même que son univers aromatique.

Avantageusement, le procédé de l'invention permet de réduire significativement le titre alcoométrique volumique (TAV) d'un vin sans pour autant avoir besoin de multiplier les étapes aux nombreux inconvénients connus des techniques séparatives et/ou thermiques, qui sont longues, onéreuses, et préjudiciables à la qualité gustative du vin désalcoolisé, notamment si elles sont trop répétées.

De manière particulièrement avantageuse, le procédé de l'invention peut être mis en œuvre sans aucune utilisation et/ou aucun ajout de composé exogène au vin à désalcooliser en tant qu'intrant de désalcoolisation. Le vin ainsi désalcoolisé n'est constitué que de composés initialement présents dans le vin initial à désalcooliser. Ainsi, le procédé de désalcoolisation mis en œuvre est compatible avec les plus hautes exigences de qualité, à l'instar de celles des cahiers des charges de type « Appellation d'Origine Protégée » (AOP) ou « Appellation d'Origine Contrôlée » (AOC), dans lesquelles un lot de raisins donné est transformé en vin qui est susceptible d'être désalcoolisé sans recourir à aucun intrant de désalcoolisation, préservant ainsi sa typicité.

Le procédé de l'invention est également avantageusement un procédé polyvalent et industrialisable, capable de s'adapter aux différentes typologies de vins à désalcooliser.

Un autre avantage du procédé de l'invention est qu'il génère peu voire pas du tout de déchets. En effet, toutes les fractions issues du vin destiné à être désalcoolisé peuvent être utilisées au cours du procédé de l'invention, étant entendu que l'optimisation du procédé comprend l'utilisation de son propre agent de diafiltration.

Un avantage additionnel du procédé de l'invention est que sa mise en œuvre ne nécessite pas la fabrication spécifique (et donc l'acquisition et les coûts associés par ailleurs) de nouveaux dispositifs spécifiques à la désalcoolisation, mais il utilise des équipements connus de l'homme du métier, déjà largement employés dans les industries de fermentation de biomasse, des boissons alcoolisées et du vin en particulier.

Ce procédé peut ainsi être qualifié de procédé durable, ou de « procédé vert », car respectueux de la nature.

La présente demande décrit le premier procédé de désalcoolisation de qualité permettant : d'ajuster le TAV final du vin à volonté (faible taux d'alcool, dans tous les cas un TAV inférieur d'au moins 0,5% vol. au TAV de départ - ou un TAV quasi-nul, inférieur à 0,5% vol.) et/ou de s'adapter aux caractéristiques du vin initial (TAV, typicité, etc.) à l'aide de moyens techniques compatibles avec des modes de production variés (par exemple, en mode batch ou fed-batch).

Est également écrit ici un perméat métabolisé, susceptible d'être obtenu par la mise en œuvre des étapes (a) et (b) du procédé telles que décrites ci-dessus.

Ce perméat métabolisé est un nouveau produit qui correspond à une fraction obtenue à partir d'un vin, comprenant majoritairement de l'eau et de l'éthanol, dans laquelle l'éthanol a été consommé partiellement ou totalement par des levures, en conditions aérobies.

Ce perméat métabolisé peut être utilisé dans la mise en œuvre d'au moins trois étapes du procédé de l'invention :
- Lors de l'étape (a') optionnelle, pour abaisser le TAV du perméat, avant de le soumettre à l'étape (b) ;
- Lors de l'étape (c) optionnelle, comme agent de diafiltration, pour abaisser le TAV du rétentat ;
- Lors de l'étape (d), pour obtenir un vin désalcoolisé, en association avec un volume de rétentat.

### DESCRIPTION DES FIGURES

D'autres caractéristiques, buts et avantages de l'invention ressortiront de la description qui suit, qui est purement illustrative et non limitative, et qui doit être lue en regard des dessins annexés selon lesquels :
La **figure 1** illustre de façon schématique les étapes essentielles du procédé de l'invention, destiné à obtenir un vin partiellement désalcoolisé. Les étapes (a), (b) et (d) sont représentées schématiquement.
La **figure 2** illustre de façon schématique les étapes essentielles du procédé de l'invention, destiné à obtenir un vin totalement désalcoolisé. Les étapes (a), (b), (c) et (d) sont représentées schématiquement.
La **figure 3** illustre un équipement d'osmose inverse, comprenant une plateforme d'alimentation (19), une plateforme d'osmose inverse (20) et une cuve à perméat (18).

La plateforme d'alimentation (19) comprend une cuve palette de 500 litres (1) comprenant une électrovanne commandée (2), un détendeur d'azote (3), un capteur de pression (4) et une sonde à oxygène (5). Elle comprend également des capteurs de température (6), un échangeur à plaques (7), une pompe de circulation (8), une vanne trois voies (9), une pompe centrifuge (10), un débitmètre massique (11), une crépine (12), une Interface de Programmation Applicative (API) (13) et une Interface Homme Machine (IHM) (14).

La plateforme d'osmose inverse (20) comprend une pompe positive (15), une membrane (16) et une vanne pression (17). Elle est reliée à la cuve de perméat (18) par un tuyau contrôlé par un débitmètre.

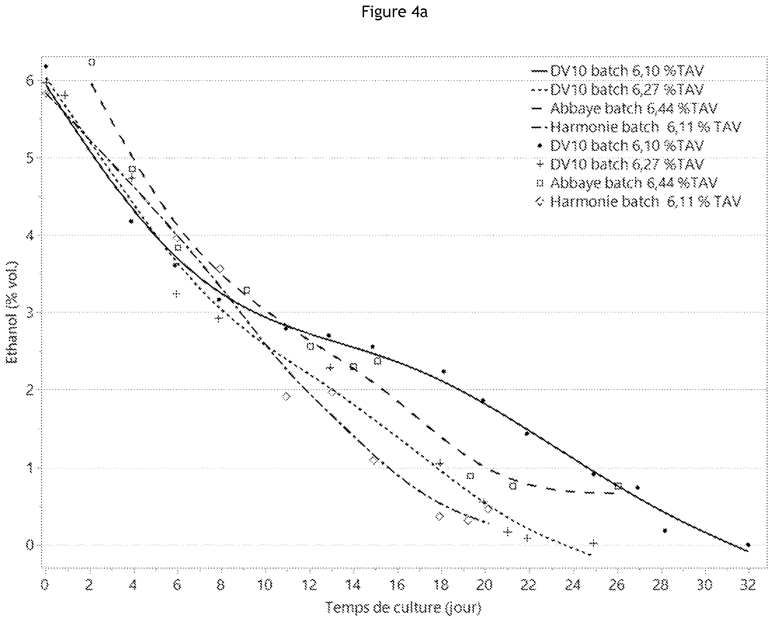

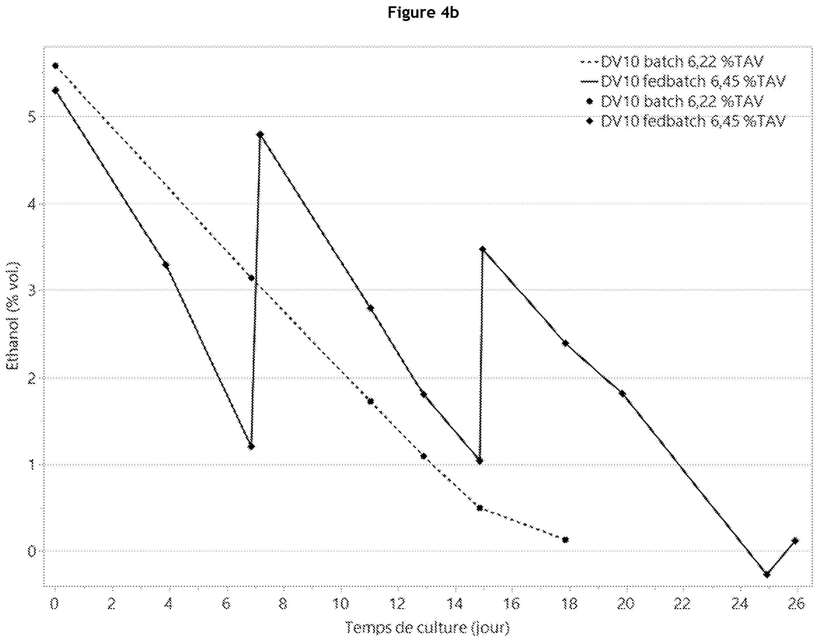

Les figures 4a et 4b illustrent l'étape (b3) de métabolisation de l'éthanol présent dans un perméat de TAV d'environ 6% vol., après dilution.

La **figure 4a** illustre l'étape (b3) de métabolisation, en mode batch, de l'éthanol présent dans un perméat présentant un TAV d'environ 6% vol. (les TAV exacts sont indiqués sur la figure), en fonction du temps d'incubation avec les levures, exprimé en jours. Le TAV de 6% vol. a été obtenu par dilution d'un perméat de TAV plus élevé.

Les souches des levures utilisées sont des souches de Saccharomyces cerevisiae :
- Vitilevure DV10^{®}, sélectionné par le Comité interprofessionnel du vin de Champagne (CIVC) et commercialisée par la société Danstar, connue pour être utilisée pour la vinification d'un champagne, ou plus généralement de vins mousseux vinifiés selon la méthode champenoise ;
- Lalbrew^{®} Abbaye, commercialisé par la société Lallemand et utilisée pour le brassage de bières,
- IOC Harmonie^{®}, sélectionné par l'Université de Californie Davis sur le nom « Davis 522 », commercialisé par Institut Œnologique de Champagne (IOC) ainsi que nombreuses entreprises autour du monde, connue comme étant une souche robuste, utilisée pour la vinification de vin blanc, rosé ou rouge.

Le graphe montre :
- deux exemples avec la souche DV10 (points et trait plein, commençant à 6,10 % vol. ; symboles d'addition et trait en pointillés, commençant à 6,27 % vol.),
- un exemple avec la souche Abbaye (carrés et trait avec de grands tirets, commençant à 6,44 % vol.), et
- un exemple avec la souche Harmonie (diamants et trait avec petits et grands tirets, commençant à 6,11 % vol.)

La **figure 4b** illustre l'étape (b3) de métabolisation en mode batch (ronds noirs et trait en pointillés, commençant à 6,22 % vol.) et en mode fed-batch (losanges noirs et trait plein, commençant à 6,45 % vol.), de l'éthanol présent dans un perméat, en fonction du temps d'incubation avec les levures, exprimé en jours. Le TAV d'environ 6% vol. a été obtenu par dilution d'un perméat de TAV plus élevé. La souche de levures utilisée est une souche de Saccharomyces cerevisiae (Vitilevure DV10^{®}).

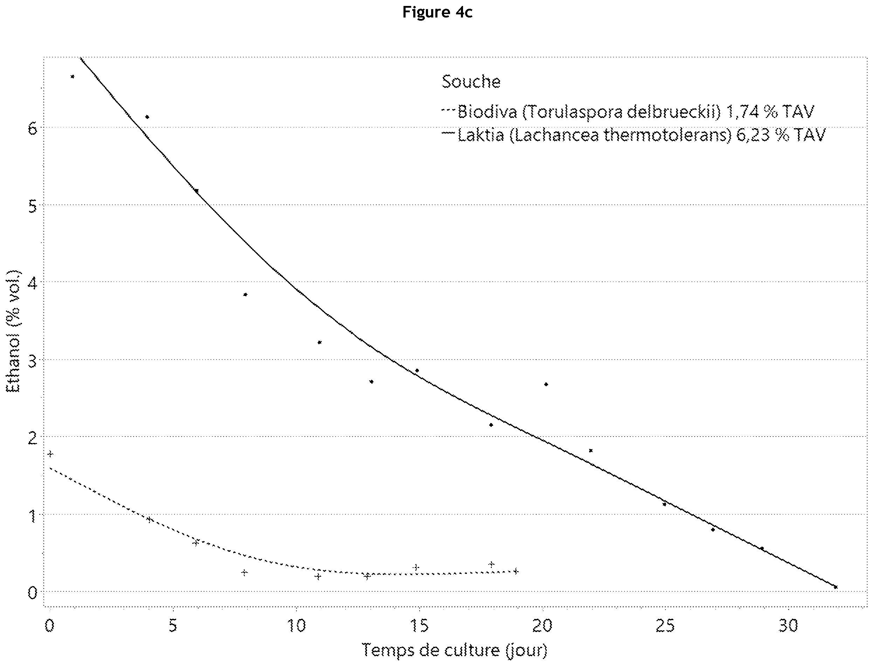

La **figure 4c** illustre l'étape (b3) de métabolisation, en mode batch, de l'éthanol présent dans un perméat issu d'un vin blanc sec en fonction du temps d'incubation avec les levures, exprimé en jours. Il s'agit d'un perméat à environ 10% vol. d'alcool, issu d'une osmose inverse séparative d'un vin blanc, puis dilué par ajout d'eau de source (marque Cristaline).

Les deux souches utilisées sont des espèces non*-Saccharomyces, Lachancea thermotolerans* (points et trait plein commençant à 6,23% vol d'éthanol), et *Torulaspora delbrueckii* (symboles d'addition et trait en pointillés, commençant à 1,74% vol d'éthanol)

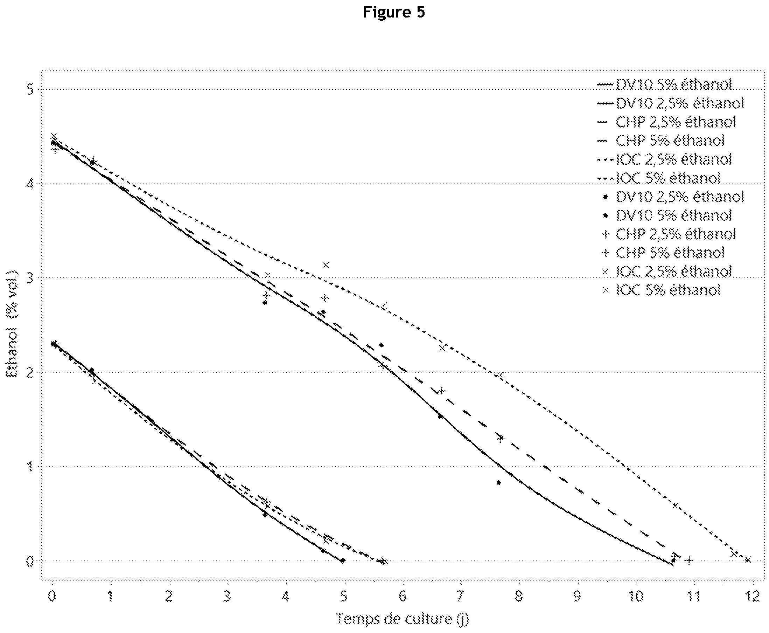

La **figure 5** illustre l'étape (b3) de métabolisation de l'éthanol présent dans deux types de perméat (de TAV = 2,5 % vol. ou 5 % vol.) par trois souches différentes de levures de l'espèce Saccharomyces cerevisiae. Ces souches sont indigènes de la viticole champenoise, utilisées dans la vinification du champagne, ou plus généralement de vins mousseux vinifiés selon la méthode champenoise :
- Vitilevure DV10^{®}, présentée ci-dessus ;
- IOC18-2007, sélectionnée et commercialisée par la société Institut Œnologique de Champagne ; et
- Levuline CHP^{®}, sélectionnée par le CIVC et commercialisée par la société Danstar.

Le graphe montre les souches DV10 (ronds noirs et trait plein), CHP (symboles d'addition et trait avec de grands tirets) et IOC18-2007 (croix et trait en pointillés).

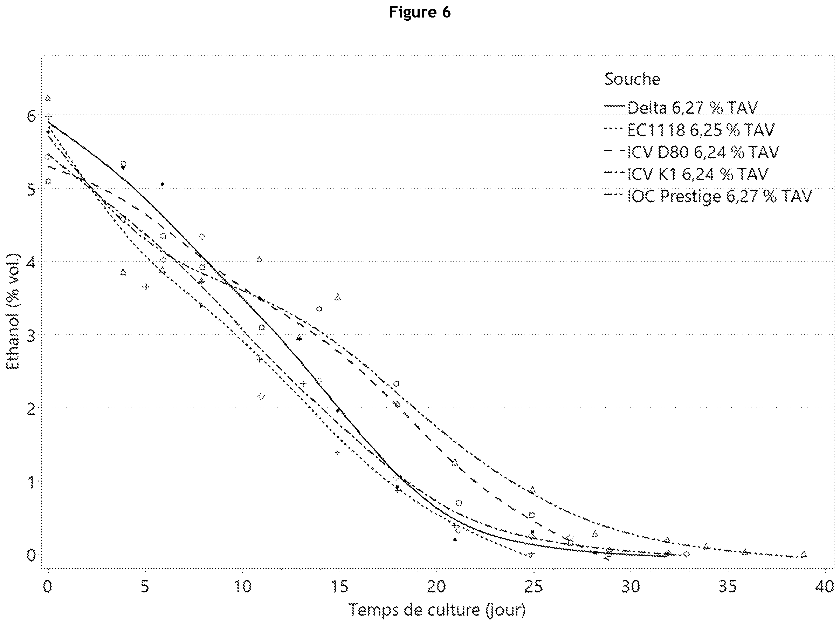

La **figure 6** illustre l'étape (b3) de métabolisation, en mode batch, de l'éthanol présent dans un perméat issu d'un vin blanc sec présentant un TAV d'environ 6% vol. (les TAV exacts sont indiqués sur la figure), en fonction du temps d'incubation avec les levures, exprimé en jours. Le TAV d'environ 6% vol. a été obtenu par dilution d'un perméat de TAV plus élevé avec un perméat 0 % vol. issu d'un cycle de désalcoolisation préalable.

Les souches des levures utilisées sont des souches de *Saccharomyces cerevisiae* Zyamaflore Delta^{®} (points et trait plein), la souche EC-1118 (symboles d'addition et trait en pointillés) Lalvin ICV D80 (carrés et trait avec de grands tirets), la souche ICVK1 (diamants et trait avec petits et grands tirets) et la souche IOC Prestige (triangles avec séquence deux petits et un grand tiret).

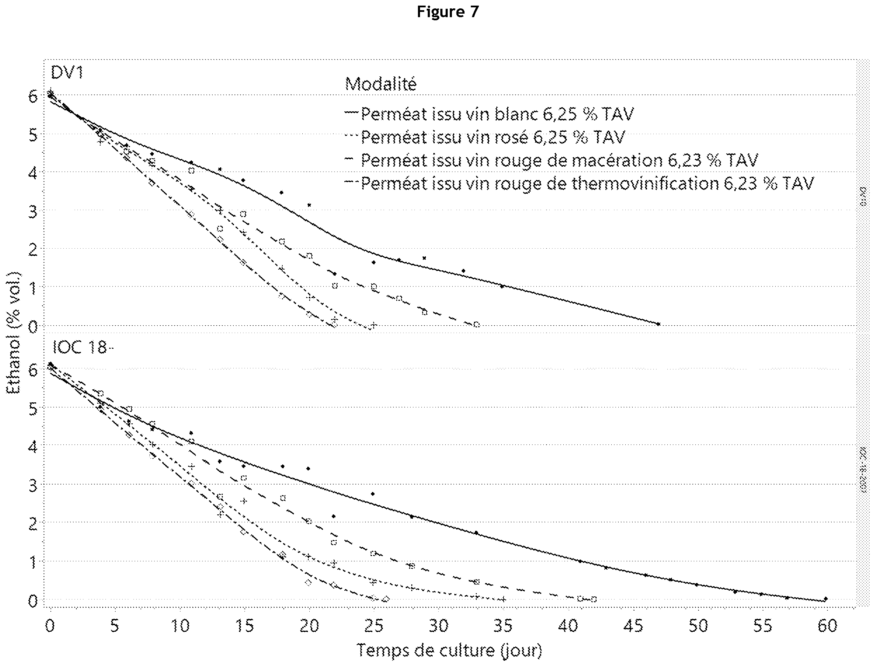

La **figure 7** illustre l'étape (b3) de métabolisation, en mode batch, de l'éthanol présent dans des perméats issus de vin blanc, de vin rosé, de vin rouge de macération, et de vin rouge de thermovinification, présentant un TAV d'environ 6,25% vol., en fonction du temps d'incubation avec les levures, exprimé en jours.

Le TAV d'environ 6,25% vol. a été obtenu à partir d'un perméat à environ 10% vol. d'alcool dilué avec ajout de perméat 0 % vol. issu d'un cycle de désalcoolisation préalable.

Les souches des levures utilisées sont des souches champenoises de *Saccharomyces cerevisiae* : Vitilevure^{®} DV10 (panneau supérieur) et la souche IOC 18-2007 (panneau inférieur). Les différents perméats traités sont : du perméat issu de vin blanc (points et trait plein), du perméat issu de vin rosé (symboles d'addition et trait en pointillés), du perméat issu de vin rouge de macération (carrés et trait avec de grands tirets), et du perméat issu de vin rouge de thermovinification (diamants et trait avec petits et grands tirets).

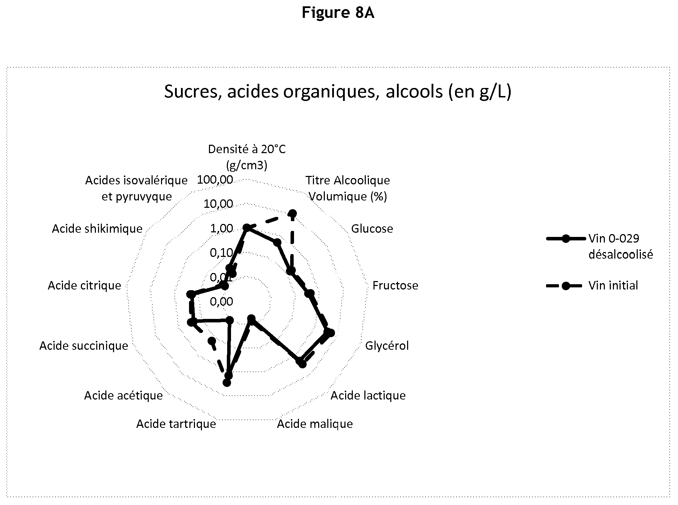

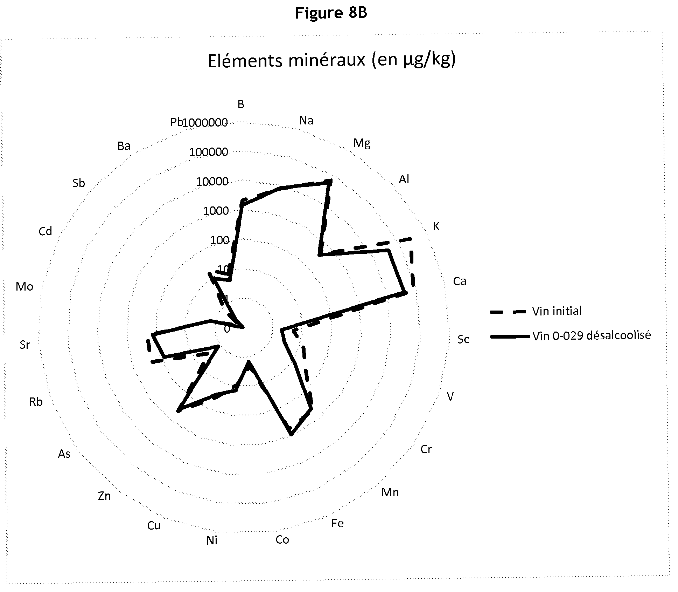

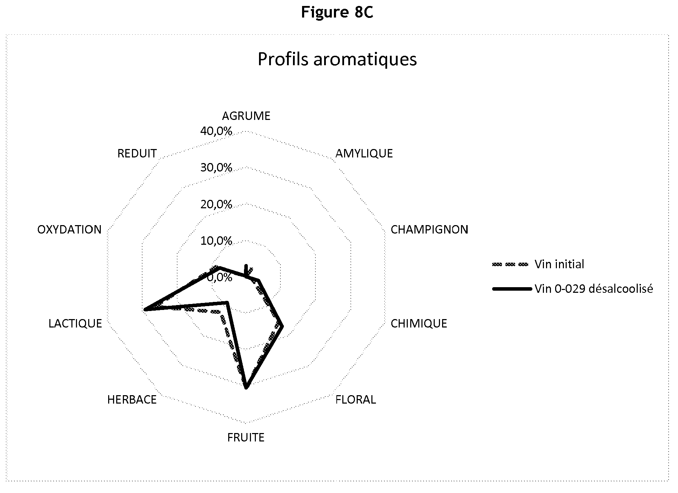

Les **figures 8A****,** **8B** **et** **8C** illustrent les propriétés d'un vin blanc désalcoolisé (Vin 0-029) selon le procédé de l'invention, représenté en trait plein ; en comparaison avec le vin initial, non soumis au procédé, représenté en pointillés.

8A) Graphique illustrant le profil en sucres, acides organiques et alcools des boissons étudiées. Sauf pour la quantité d'alcool exprimée en %, les autres concentrations sont exprimées en g/L.

8B) Graphique illustrant le profil en éléments minéraux (Na, Mg, Al, Ca, etc) des boissons étudiées. Les concentrations sont exprimées en µg/kg.

8C) Graphique illustrant le profil aromatique des boissons étudiées.

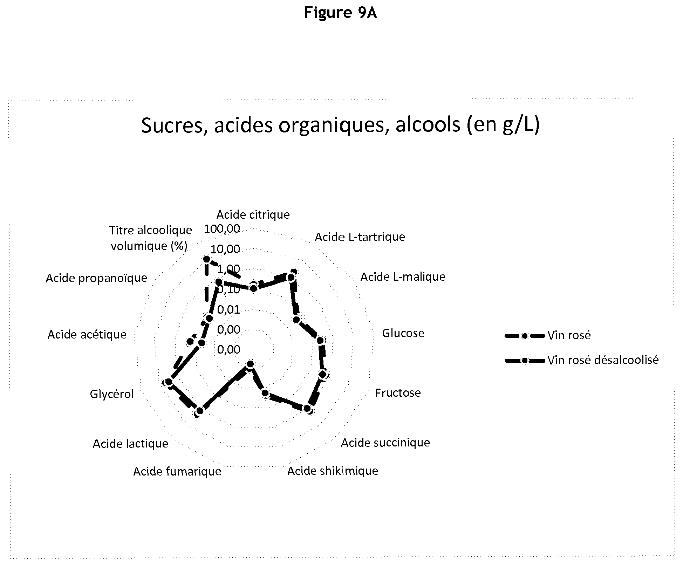

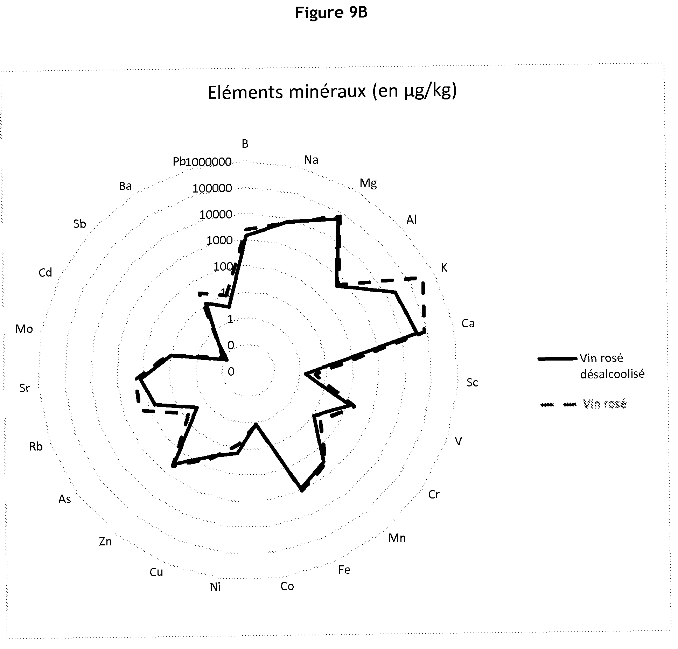

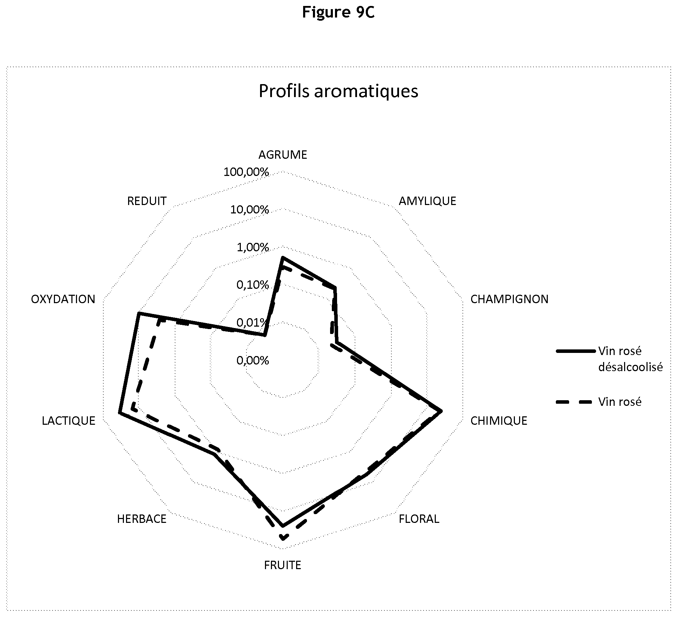

Les figures **9A****,** **9B** **et** **9C** illustrent les propriétés d'un vin rosé désalcoolisé selon le procédé de l'invention, en comparaison avec le vin initial, non soumis au procédé.

9A) Graphique illustrant le profil en sucres, acides organiques et alcools des boissons étudiées. Sauf pour la quantité d'alcool exprimée en %, les autres concentrations sont exprimées en g/L.

9B) Graphique illustrant le profil en éléments minéraux (Na, Mg, Al, Ca, etc) des boissons étudiées. Les concentrations sont exprimées en µg/kg.

9C) Graphique illustrant le profil aromatique des boissons étudiées.

### DESCRIPTION DETAILLEE DE L'INVENTION

### Définitions

Pour une meilleure compréhension de l'invention, les termes employés dans la présente demande sont définis ci-après.

Dans la présente demande, le terme « alcool » désigne l'éthanol de formule chimique semi-développée CH₃-CH₂-OH, de numéro CAS 64-17-5.

Le terme « vin » désigne une boisson alcoolisée, c'est-à-dire contenant de l'alcool, obtenue par la fermentation de raisins frais ou de moût de raisins obtenu par pressurage. La préparation du vin comporte une étape de « vinification », lors de laquelle le moût de raisin subit une fermentation alcoolique grâce à la présence de levures, qui transforment le sucre du raisin en alcool et gaz carbonique. Les étapes suivantes de préparation sont l'élevage du vin, l'assemblage puis la mise en bouteilles.

Ce terme « vin » regroupe les vins tranquilles et les vins mousseux, autrement dit des vins non effervescents et des vins effervescents.

Parmi les vins tranquilles, on citera notamment les vins rouges, blancs et rosés, avec ou sans sucres résiduels, les vins sans sucre résiduel étant désignés « vins sec » et les vins avec sucres résiduels étant désignés « vins moelleux » ou « vins liquoreux » en fonction de leur teneur en sucres.

Parmi les vins mousseux, on citera notamment le champagne (selon l'Appellation d'Origine Contrôlée « Champagne ») et les vins obtenus selon la méthode champenoise (grâce à une seconde fermentation en bouteille) ainsi que les vins gazéifiés en cuve.

Dans le cadre d'un vin mousseux, on entend par « vin de base » un vin non effervescent, dont le procédé de fermentation est terminé, qui serait propre à la consommation. Ce « vin de base » peut être transformé en vin mousseux de deux manières différentes grâce à une étape de gazéification : soit par l'ajout artificiel de CO2 au vin de base ou par l'ajout de produits nécessaires (sucres, levures, adjuvants de fermentation) à la production de CO2 dans le vin de base lors d'une deuxième fermentation, ladite fermentation produisant le CO2 pour rendre le vin de base effervescent.

Au sens de l'invention, on entend par titre alcoométrique volumique (TAV), aussi appelé degré alcoolique, la proportion d'alcool dans un vin. Il s'agit de la valeur obtenue en effectuant le quotient suivant : volume d'éthanol / volume total du vin, ces volumes étant tous deux mesurés à la température de 20°C, selon le Recueil International Des Méthodes D'analyses - OIV.

Dans la présente demande, tous les TAV sont exprimés en pourcentage volumique d'alcool (% vol.).

Pour déterminer le TAV d'une boisson alcoolisée, l'éthanol présent dans la boisson est séparé par distillation, puis la densité du distillat est mesurée afin de déterminer le volume d'alcool pur extrait, sachant que la densité à 20 °C de l'éthanol (0,789) est différente de celle de l'eau (1 par définition).

Il existe également des instruments de mesure étalonnés, utilisés par les professionnels pour mesurer le titre alcoométrique des boissons, sans passer par une étape de distillation : il s'agit notamment des densimètres électroniques.

Avantageusement, le TAV est mesuré par chromatographie en phase liquide à haute performance (HPLC).

On entend par « vin » ou « vin initial » un vin qui est soumis au procédé selon l'invention.

Au sens de l'invention, on entend par « procédé de désalcoolisation » un processus permettant la diminution du TAV du vin initial présentant un titre alcoométrique volumique (TAV) de valeur TAV (1). A l'issue de ce procédé, est obtenu un vin désalcoolisé présentant une valeur de TAV (2) strictement inférieure à TAV (1).

Cette désalcoolisation pourra être partielle ou totale.

Dans le cas d'une désalcoolisation partielle, le vin désalcoolisé présente à l'issue de la mise en œuvre du procédé une valeur de TAV diminuée d'au moins 1 % vol. par rapport à la valeur du TAV du vin initial. De préférence, la valeur de TAV du vin désalcoolisé sera inférieure d'au moins 2 % vol, voire d'au moins 3% vol., à la valeur de TAV du vin initial, après la mise en procédé de l'invention.

Dans le cas d'une désalcoolisation totale, le vin désalcoolisé présente une valeur de TAV inférieure ou égale à 0,5% vol., voire une valeur de TAV égale à 0% vol. c'est-à-dire une masse d'éthanol nulle. En effet, selon la règlementation applicable de l'office international du vin (OIV), tout vin présentant un TAV inférieur à 0,5 % vol. est considéré comme étant un vin non alcoolisé ou désalcoolisé totalement.

Au sens de l'invention, on entend par « valeur de TAV égale à 0 % vol. » une valeur proche de 0, c'est-à-dire où seulement des traces d'alcool seront présentes dans le produit concerné. Comme cela est bien connu par l'Homme du métier, ces traces seront en une quantité négligeable, par exemple en une quantité inférieure ou égale à 0,01 % vol., ce qui est proche du seuil de détection des appareils de mesure.

Au sens de l'invention, on entend par « intrant » ou « intrant de désalcoolisation » tout composé exogène susceptible d'être ajouté au vin initial lors du procédé de désalcoolisation, qui n'était pas présent dans le vin initial et qui est donc considéré comme « intrant ». Il pourra s'agir par exemple d'eau exogène, ajoutée lors d'une étape de dilution.

Au sens de l'invention, on entend par « membrane » une barrière sélective qui réduit le transfert d'un soluté par rapport à un autre, le plus souvent d'un soluté par rapport à l'eau. Les membranes présentent une structure poreuse. Elles sont constituées de matériaux organiques (polymères tels qu'acétate de cellulose, polysulfone, polyester, polypropylène) ou de matériaux inorganiques (ZrO2, TiO2, alumine, céramique). Il existe des membranes adaptées pour chaque procédé de filtration (nanofiltration, osmose inverse) comme cela est bien connu par l'Homme du métier.

On entend par « fraction » une sous-partie du volume du vin initial, obtenue après une étape (a) de séparation physique par une membrane.

On entend par « rétentat » l'une des deux fractions obtenues par séparation membranaire à partir du vin initial. Il s'agit de la fraction qui ne franchit pas la membrane. Cette fraction concentrée comprend tous les éléments présents dans le vin initial, et notamment de l'eau, de l'éthanol, du glycérol, des acides organiques, des sucres et des composés aromatiques. Cette fraction « rétentat » comprend notamment les molécules aromatiques responsables des qualités gustatives du vin.

On entend par « perméat » la seconde fraction obtenue par séparation membranaire à partir du volume du vin initial. Il s'agit de la fraction qui franchit la membrane : elle n'est pas concentrée, et est composée majoritairement d'eau et d'éthanol.

Au sens de l'invention, une « fraction composée majoritairement de » est comprise comme étant une fraction constituée à au moins 90% en masse des composés cités. En d'autres termes, dans cette fraction, les composés minoritaires sont présents en une proportion inférieure à 10% en masse cumulée de tous les composants minoritaires, par rapport à la masse totale.

### Exposé détaillé de l'invention

La présente invention concerne un procédé de désalcoolisation d'un volume V1 de vin présentant un titre alcoométrique volumique (TAV) de valeur TAV (1), comprenant la mise en œuvre des étapes suivantes :
a) Séparation du volume V1 du vin en deux fractions à l'aide d'une méthode séparative membranaire :
   - Une fraction concentrée d'un facteur k dite « rétentat », le volume de cette fraction étant égal à 1/k V1, cette fraction ayant une valeur de TAV(R);
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) Optionnellement, diafiltration du rétentat avec du perméat métabolisé, pour obtenir :
   - un « rétentat diafiltré » ayant une valeur de TAV (R diafiltré) inférieure à TAV (R), et
   - un « perméat métabolisé diafiltré » ayant une valeur de TAV supérieure à TAV (P métabolisé), ledit perméat métabolisé diafiltré étant ensuite optionnellement resoumis à l'étape (b) ;
d) Association d'un volume de rétentat, optionnellement diafiltré, et d'un volume de perméat métabolisé, pour obtenir un volume V2 de vin désalcoolisé, présentant une valeur de TAV (2) inférieure à TAV (1).

Au cours du procédé, chaque fraction obtenue est caractérisée par un titre alcoométrique volumique (TAV) tel que défini ci-dessus. Ce titre est toujours exprimé, dans la présente demande, en % volumique de l'alcool présent, par rapport au volume total de la fraction concernée. Les abréviations suivantes sont utilisées dans la présente description :
- TAV (1) : titre alcoométrique volumique du vin initial de volume V1 ;
- TAV (P) : titre alcoométrique volumique du perméat issu de l'étape (a) du procédé ;
- TAV (P métabolisé) : titre alcoométrique volumique du perméat ayant été soumis à l'étape (b) du procédé ;
- TAV (R) : titre alcoométrique volumique du rétentat issu de l'étape (a) du procédé ;
- TAV (R diafiltré) : titre alcoométrique volumique du rétentat suite à sa diafiltration à l'étape (c) ;
- TAV (2) : titre alcoométrique volumique du vin désalcoolisé, obtenu par association d'un volume de rétentat, optionnellement diafiltré, et d'un volume de perméat métabolisé.

Les trois étapes essentielles a, b et d seront de préférence réalisées dans cet ordre successif : a, b puis d.

### Etape (a) de séparation physique par une membrane

La première étape du procédé selon l'invention est une étape de séparation physique du volume V1 de vin initial, à l'aide d'une membrane, en deux fractions :
i. Une fraction concentrée d'un facteur k dite « rétentat » comprenant tous les éléments initialement présents dans le vin, et notamment de l'eau, de l'éthanol, du glycérol, des acides organiques, des sucres et des composés aromatiques, le volume de cette fraction étant égal à 1/k V1; et
ii. Une fraction dite « perméat » comprenant majoritairement de l'eau et de l'éthanol, le volume de cette fraction étant égal à (k-1)/k V1, et son TAV ayant une valeur de TAV (P).

### Séparation physique à l'aide d'une membrane

La méthode séparative membranaire utilisée dans ce procédé est basée sur l'utilisation de membranes perméables. La membrane agit comme un filtre très spécifique qui laisse passer l'eau, tandis qu'elle retient certains solutés dissous, en fonction de sa sélectivité, qui dépend de la taille des pores et de la diffusibilité des solutés au sein de la membrane. Il existe plusieurs méthodes pour permettre aux substances de pénétrer la membrane. Il peut s'agir par exemple d'une application de pression, du maintien d'un gradient de concentration des deux côtés de la membrane, ou encore de l'application d'un potentiel électrique.

Parmi les techniques séparatives membranaires, on distingue la microfiltration, l'ultrafiltration, la nanofiltration et l'osmose inverse (OI ou hyperfiltration), dans l'ordre décroissant de la taille des pores des membranes utilisées.

Différents paramètres sont utilisés pour caractériser le fonctionnement de ces technologies membranaires. En particulier, la sélectivité du procédé est évaluée par les paramètres complémentaires « taux de rejet » et « taux de rétention ».

Le choix du type de membrane dépend d'un grand nombre de paramètres, notamment de sa sélectivité vis-à-vis des composés à séparer. D'autres caractéristiques telles que la densité, le risque de colmatage, le nettoyage nécessaire, et le coût, sont également à prendre en compte. Dans le présent procédé, le choix de la membrane sera essentiellement basé sur ses caractéristiques de sélectivité vis-à-vis de l'éthanol et du glycérol.

La membrane utilisée dans le procédé selon l'invention devrait idéalement répondre à la caractéristique suivante : elle devrait permettre de séparer deux fractions, avec la totalité de l'éthanol dans le perméat, et la totalité du glycérol qui serait retenu dans le rétentat. Ainsi, la membrane idéale présenterait : (i) un taux de rejet de 1 pour le glycérol et les autres composés du vin à désalcooliser, et (ii) un taux de rejet très faible, idéalement de zéro, pour l'éthanol. Toutefois, il n'existe pas à ce jour de membrane présentant conjointement ces deux propriétés.

Néanmoins, au regard de ses connaissances générales, l'Homme du métier saura choisir la membrane la plus adaptée pour mettre en œuvre cette étape de séparation physique en deux fractions, en fonction d'une part des caractéristiques du vin à désalcooliser, et d'autre part de la qualité souhaitée pour le produit final.

Pour assurer une qualité optimale du vin désalcoolisé obtenu après la mise en œuvre du procédé, il est préférable de choisir une membrane ayant un taux de rejet du glycérol proche ou égal à 1, quitte à ce que le taux de rejet de l'éthanol ne soit pas aussi proche de zéro que ce qui serait souhaité. Les membranes présentant un taux de rejet de 1 pour le glycérol ont généralement un taux de rejet autour de 0,33 pour l'éthanol.

Aussi, pour obtenir un procédé de désalcoolisation présentant une efficacité maximale, il est préférable de choisir une membrane ayant un taux de rejet de l'éthanol très faible, proche de zéro.

La séparation physique membranaire de l'étape (a) peut être réalisée selon toutes les techniques membranaires bien connues de l'Homme du métier. En particulier, ladite séparation physique du vin à désalcooliser en deux fractions pourra être réalisée par nanofiltration ou par osmose inverse.

La sélectivité des membranes de nanofiltration est définie par une taille de solutés pouvant être séparés par la membrane est perméable. Ces solutés ont une masse molaire se situant entre 200 et 1000 Daltons.

Selon une mise en œuvre préférée de l'invention, l'étape (a) est réalisée par osmose inverse ou par nanofiltration, de préférence par osmose inverse.

La sélectivité des membranes d'osmose inverse est également définie par leur taux de rejet de sels. Pour la mise en œuvre du procédé selon l'invention, on utilisera de préférence une membrane présentant un taux de rejet de sels très élevé.

Selon une mise en œuvre préférée de l'invention, la membrane utilisée présente un taux de rejet de sels supérieur à 0,9 (soit un taux de rejet de 90% des sels), de préférence supérieur à 0,95, et de manière tout à fait préférée supérieure ou égale à 0,97.

Selon une mise en œuvre préférée, la membrane utilisée dans le procédé selon l'invention est une membrane organique en polypropylène.

Des exemples de membranes d'osmose inverse, disponibles dans le commerce et convenant pour la mise en œuvre du procédé selon l'invention, sont présentés dans la partie expérimentale de la présente demande. Le flux qui sera appliqué à chaque membrane sera adapté en fonction de la membrane choisie, selon les conditions recommandées par le fournisseur de la membrane.

La pression de l'osmoseur sera de préférence comprise entre 20 et 100 bars, et pourra notamment être égale à 50 bars.

Un exemple chiffré de séparation physique d'un vin, à l'aide d'une membrane, par osmose inverse, sous une pression de 50 bars, et en concentrant le rétentat d'un facteur 8, est présenté dans le tableau 1 ci-dessous :

**Tableau 1**

| **Produit ou fraction** | **Vin** | **Perméat** | **Rétentat** |
|---|---|---|---|
| Volume | 8/8 | 7/8 | 1/8 |
| TAV théorique des fractions | 11,6% vol. | 9,3% vol. | 28 % vol. |
| TAV observé des fractions (moyenne sur 40 essais) | | 9,7 % vol. | 21 % vol. |
| Concentration en éthanol de chaque fraction (g/L) | 91,5 g/L | 76,5 g/L | 165,7 g/L |

Dans cet exemple, il apparait que 73% de l'éthanol, s'est écoulée dans le perméat, mais que 27% de l'éthanol a été retenu par la membrane dans le rétentat très concentré.

De préférence, l'étape (a) de séparation membranaire est réalisée à une température comprise entre 15°C et 25°C, plus préférentiellement entre 15°C et 20°C, ou encore entre 15°C et 18°C.

De plus, cette étape (a) sera préférentiellement réalisée sous une atmosphère principalement composée de gaz inerte, et plus précisément comprenant moins de 3% de dioxygène, ou mieux moins de 2% de dioxygène, voire moins de 1% de dioxygène.

En effet, la présence de dioxygène dans l'atmosphère du dispositif utilisé pourrait être à l'origine d'une oxydation des composés du vin. Or, les composés d'intérêt du vin, et notamment les composés aromatiques du vin, peuvent être dégradés par l'oxydation et il est donc préférable de limiter ce phénomène.

Ces conditions particulières, de température et d'atmosphère comprenant une faible proportion de dioxygène, permettent de séparer ces deux fractions tout en évitant la dénaturation des composés d'intérêt du vin qui seront concentrés dans le rétentat.

Généralement, dans l'art antérieur, une étape de séparation physique est accompagnée d'un échauffement du dispositif employé, et en conséquence du vin traité. Or, l'élévation de la température est préjudiciable à la qualité des composés du vin, notamment des composés d'intérêt tels que les composés aromatiques.

Selon une option de mise en œuvre, le procédé selon l'invention ne comprend pas d'étape de chauffage. Le procédé peut éventuellement comprendre une étape de refroidissement, pour réguler l'augmentation de température observée lors de l'étape de séparation membranaire.

### Caractéristiques des deux fractions obtenues

A l'issue de l'étape de séparation physique, le rétentat est concentré d'un facteur de concentration k. Ainsi :
a) pour un facteur de concentration k=2, le volume Vr du rétentat sera de ½ du volume V1 du vin initial;
b) pour un facteur de concentration k=8, le volume Vr du rétentat sera de 1/8 du volume V1 du vin initial.

Selon une mise en œuvre particulière de l'invention, le facteur de concentration k est compris entre 0,1 et 20, préférentiellement entre 2 et 10, plus préférentiellement entre 5 et 10.

Pour que le procédé selon l'invention soit efficace, il n'est pas nécessaire que le facteur de concentration k soit très élevé ; ainsi, dans le cas où k est égal à 2, le procédé selon l'invention permet l'obtention d'un vin désalcoolisé de TAV égal à 2/3 du TAV du vin initial.

Le facteur de concentration k pertinent pour la mise en œuvre de l'invention pourra être déterminé par l'Homme du métier, notamment en fonction de la nature du vin initial, de son TAV, de sa pression osmotique et de sa concentration en solutés.

Par exemple, pour la désalcoolisation complète d'un vin de TAV d'environ 11 % vol., le facteur de concentration k est avantageusement égal à 8.

Le perméat est majoritairement composé d'eau et d'éthanol. Le terme « majoritairement » désigne le fait que moins de 10%, voire moins de 5%, ou moins de 4%, ou de préférence moins de 3% en masse des composés minoritaires du perméat sont d'une autre nature que de l'eau ou de l'éthanol. Le perméat pourra par exemple être constitué de :
c) 98% d'eau et d'éthanol ; et de
d) 2% au plus d'autres composés, tels que des acides ou autres molécules organiques de faible poids moléculaire.

En guise d'exemple, la composition suivante en masse de perméat à environ 9,3 % vol. a été observée : dans 1000 grammes de perméat, on mesure 925 g d'eau, 73 g d'éthanol et 2 g d'autres composés (soit 0,2 % masse/masse).

Le rétentat est constitué d'eau, et contient tous les autres éléments composant le vin, en particulier les principaux composés d'intérêts : le glycérol, les acides organiques (tels que l'acide lactique, l'acide acétique, l'acide tartrique, l'acide malique, l'acide succinique), sucres (le fructose notamment), polyphénols, composés aromatiques (notamment des esters, comme par exemple l'acétate d'éthyle), etc. Ces composés sont plus concentrés que dans le vin initial.

Le rétentat comprend également de l'éthanol, l'opération d'osmose d'inverse ne permettant pas de séparer complètement les composés glycérol et éthanol, pour les raisons présentées précédemment.

Lors de la mise en œuvre des étapes suivantes (b) et optionnellement (a'), le rétentat obtenu à l'étape (a) est conservé, de préférence à une température inférieure à 10 °C, avant son utilisation ultérieure lors des étapes (d) et optionnellement (c).

### Etape (a') de diminution du TAV (P) du perméat

Selon une mise en œuvre particulière de l'invention, le perméat est soumis à au moins une étape (a') de diminution de son TAV (P).

En effet, il peut être avantageux de débuter l'étape (b) sur un perméat présentant un TAV (P) préalablement abaissé.

Il est en effet connu de l'Homme du métier que l'éthanol, à forte concentration, peut être toxique pour les levures, notamment pour les levures du genre Saccharomyces.

Ainsi, il ne serait pas envisageable de procéder à l'étape (b) du procédé selon l'invention sur un vin, pour au moins deux raisons principales :
- Le TAV du vin serait trop élevé (généralement compris entre 10 % vol. et 15 % vol.) pour assurer la survie des levures destinées à la métabolisation de l'éthanol ;
- Les composés d'intérêts, en particulier les composés aromatiques, du vin seraient susceptibles d'être dégradés par l'action desdites levures, ceci générant une baisse de la qualité aromatique du vin désalcoolisé obtenu.

Comme cela a été présenté précédemment, pour un vin de TAV (1) = 11,6 % vol., si l'étape (a) permet de séparer un rétentat et un perméat de TAV (P)= 9,3 % vol., une telle concentration d'éthanol pourrait être trop élevée pour que les levures soient efficaces selon la souche utilisée.

Les inventeurs ont identifié que, pour limiter l'intoxication des levures par une trop forte concentration d'éthanol, la valeur du TAV (P) est idéalement inférieure ou égale à 9 % vol. A la suite de l'étape (a), le TAV (P) est avantageusement d'une valeur inférieure ou égale à 10 % vol., ou inférieure ou égale à 9 % vol., 8 % vol., 7 % vol., 6 % vol., ou encore d'une valeur inférieure ou égale à 5 % vol.

Une étape (a') de diminution du TAV (P) avant l'étape (b) peut donc avantageusement être réalisée, et ce par plusieurs techniques bien connues de l'Homme du métier.

Selon une mise en œuvre de l'invention, le perméat est soumis à au moins une étape (a') de diminution de son TAV (P).

De préférence, cette étape (a') est réalisée par évaporation, par distillation, par dilution ou par contacteur membranaire.

Selon une première mise en œuvre, cette étape (a') n'implique pas d'apport exogène de liquide, c'est-à-dire qu'aucun intrant de désalcoolisation n'est mis en œuvre. Dans ce cas, la réduction de la valeur de TAV(P) est réalisée par évaporation, par dilution ou par contacteur membranaire en utilisant comme diluant du perméat métabolisé, éventuellement filtré.

En particulier, cette étape (a') pourra être réalisée par dilution directe ou par contacteur membranaire, en utilisant comme diluant du perméat métabolisé obtenu lors d'une mise en œuvre précédente du procédé, pour entrainer l'éthanol en excès et ainsi abaisser le TAV (P) du perméat avant de le soumettre à l'étape (b).

De préférence, ledit perméat métabolisé utilisé comme diluant présente une valeur de TAV inférieure ou égale à 1% vol., ou inférieure ou égale à 0,5% vol., plus préférentiellement est égale à 0% vol.

Selon une seconde mise en œuvre, cette étape (a') est réalisée par dilution ou par contacteur membranaire avec un intrant de désalcoolisation, en utilisant comme diluant de l'eau exogène, par exemple de l'eau minérale.

En réalisant une étape (a') de diminution du TAV du perméat, on profite ainsi des avantages des deux technologies, séparation membranaire et métabolisation de l'éthanol par un procédé microbiologique :
- L'efficacité du procédé physique pour l'abaissement du TAV initial, soit par exemple une diminution de la valeur de TAV de 12 à 9 % vol., et
- La performance microbiologique qui permet la consommation totale de l'éthanol par les levures et donc par exemple l'abaissement de la valeur du TAV de 9% vol. à une valeur plus faible, idéalement de 0% vol.

### Etape (b) d'élimination partielle de l'éthanol contenu dans le perméat par des levures en état respiratoire

Dans l'étape (b) du procédé selon l'invention, le perméat de TAV (P) est additionné de levures, lesdites levures étant en état respiratoire et étant ainsi capables de métaboliser l'éthanol présent dans le perméat, par un processus biochimique de respiration.

Au sens de l'invention, on entend par « levures en état respiratoire » des levures capables de transformer des produits organiques en présence de dioxygène pour produire de l'ATP.

Cette étape (b) de métabolisation de l'éthanol est réalisée en conditions aérobies, c'est-à-dire en présence de dioxygène, plus précisément dans un milieu liquide en présence de dioxygène dissous, apporté par équilibration en continu avec une atmosphère comprenant du dioxygène, ou par un flux de gaz injecté en continue dans le milieu..

L'élimination de l'éthanol présent dans le perméat pourra être partielle ou totale. Dans le cas où l'élimination de l'éthanol est totale, le perméat métabolisé obtenu présentera une valeur de TAV égale à 0 % vol.

Selon une mise en œuvre particulière du procédé, l'étape (b) comprend trois sous-étapes :
b1) Pré-culture d'au moins 10⁶ levures par millilitre, dans un milieu de croissance comprenant une source de sucre à une concentration comprise entre 40 et 120 g/kg, en conditions aérobies,
b2) Culture d'au moins 10⁶ levures issues de l'étape (b1) par millilitre, dans un milieu de croissance comprenant une source de sucre à une concentration comprise entre 40 et 120 g/kg, en conditions aérobies, le volume de culture étant identique au volume de perméat à traiter à l'étape suivante,
b3) Addition d'au moins 2.10⁸ levures par millilitre au perméat à traiter, et métabolisation de l'éthanol par les levures en conditions aérobies.

Les deux premières phases (ou sous-étapes) ont pour but la génération de biomasse par multiplication des levures, ainsi que la mise en conditions des levures ; puis la phase b3 correspond à la phase de métabolisation de l'éthanol présent dans le perméat à proprement parler.

Les quantités de levures indiquées ci-dessus correspondent à des quantités de levures viables.

Le perméat est un milieu « hostile » pour la croissance des levures. En effet, il contient très peu de nutriments (à l'exception de l'éthanol), a une très faible conductivité, et un pH très acide (pH autour de 3, par exemple pH=3,2). Il est donc préférable de créer suffisamment de biomasse de levures avant de les ajouter au perméat pour qu'elles effectuent une transformation efficace de l'éthanol.

Grâce à ces étapes de préculture, les levures additionnées au perméat présentent une bonne viabilité et une bonne activité ; de plus elles ont stocké des nutriments importants pendant cette préculture, tels que des ions, de l'azote, des vitamines et des lipides.

Enfin, les conditions de préculture pendant les phases (b1) et (b2) permettent aux levures de modifier leur métabolisme, passant par la transition diauxique d'un métabolisme de fermentation à partir de sucres à un métabolisme de respiration à base d'éthanol.

Comme cela est bien connu par l'Homme du métier, entre chaque phase b1, b2 et b3, les levures seront récoltées, rincées et changées de contenant, le cas échéant.

Cette étape de préculture des levures sera effectuée dans les conditions habituelles bien connues de l'Homme du métier, telles que selon les conditions suivantes :
- à une température comprise entre 15°C et 38°C, et
- sous agitation.

Les milieux de croissance utilisés lors des phases b1 et b2 sont ceux bien connus par l'Homme du métier.

En particulier, le milieu de croissance des levures comprend de l'inositol, à une concentration comprise entre 2 et 200 mg/L, et de préférence à une concentration comprise entre 20 et 50 mg/L de milieu. Les effets des différentes concentrations d'inositol lors de la culture de levures *Saccharomyces cerevisiae* ont été rapportés notamment dans les articles (Ishmayana et al., 2015) et (Ishmayana et al., 2020).

Avantageusement, ledit milieu de croissance pourra également comprendre une source d'azote, notamment à une concentration comprise entre 300 et 400 mg/L, et du zinc, notamment à une concentration de 3 à 5 mg/L, et des vitamines et ions selon les besoins de la souche de levure utilisée.

Par exemple, on pourra utiliser un milieu « standard » de microbiologie comme le « Sabouraud », le « Yeast Extract Peptone » ou le « Yeast Nitrogen Base », avec ou sans acides aminés, ou encore un milieu « œnologique » comme l'Activit O (IOC), un moût issu de raisins, ou encore un moût synthétique comme utilisé par (Ochando et al. 2017). Un exemple de milieu de croissance est présenté dans la partie expérimentale.

Avantageusement, les levures sont cultivées en mode aseptique.

Le milieu de croissance utilisé lors des phases (b1) et (b2) contient une source de sucre, à une concentration comprise entre 40 et 120 g/kg, en particulier à une concentration de 80 g/kg. Cette source de sucre pourra être de plusieurs types selon des caractéristiques de la souche de levures utilisée, comme par exemple du glucose ou du saccharose ou un mélange de plusieurs sucres.

Selon une mise en œuvre préférée, la source de sucre est constituée exclusivement de saccharose.

Selon une mise en œuvre particulière du procédé, l'étape (b1) dure entre 24 et 36 heures.

Selon une autre mise en œuvre particulière du procédé, l'étape (b2) dure entre 36 et 48 heures.

Toutes ces phases sont réalisées en présence d'oxygène, c'est-à-dire en conditions aérobies.

La consommation de l'éthanol par les levures a lieu en conditions aérobies ; suite à l'ajout des levures dans le perméat, le mélange est soumis à un flux constant d'oxygène, adapté pour la mise en œuvre de ladite métabolisation de l'éthanol, où la quantité d'oxygène fournie est limitée.

Le débit d'oxygène utilisé est adapté en fonction de la quantité d'éthanol présente, pour correspondre à la quantité totale d'oxygène préalablement calculée selon l'équation chimique suivante :

CH₃-CH₂-OH + 3 O₂ -> 2 CO₂ + 3 H₂O.

Selon une mise en œuvre particulière du procédé de l'invention, l'étape (b3) de métabolisation de l'éthanol par des levures est réalisée sous un débit de dioxygène compris entre 0,001 et 0,010 volume par volume par minute (vvm), préférentiellement entre 0,002 et 0,008 vvm.

La technique classique d'aération utilisée pour cette étape est effectuée avec un mélange de type « air » composé de dioxygène (O2) et d'azote (N2), comprenant de préférence entre 20 et 35 % de dioxygène, ou plus préférentiellement entre 28 et 34% de dioxygène, pour favoriser le métabolisme respiratoire des levures.

Par exemple, l'aération des trois phases b1, b2 et b3 peut être réalisée ainsi :
- phase (b1) : les levures sont cultivées dans des erlenmeyers bouchés avec des cotons, perméables à l'air ;
- phase (b2) : les levures sont cultivées dans un fermenteur, avec une aération telle que définie ci-après: entre 0,004 et 0,008 vvm de dioxygène, fourni soit par l'apport d'un mélange d'oxygène et azote, soit par apport d'air comprimé;
- phase (b3) : les levures sont cultivées dans un fermenteur, avec une aération telle que définie ci-après: entre 0,002 et 0,008 vvm de dioxygène, fourni soit par l'apport d'un mélange d'oxygène et azote, soit par apport d'air comprimé.

Après métabolisation partielle ou totale de l'éthanol présent dans le perméat, les levures sont retirées du mélange, par toute technique connue de l'Homme du métier, telle que filtration ou centrifugation, pour obtenir une fraction dite « perméat métabolisé » de TAV (P métabolisé) de valeur inférieure à celle du perméat initial, TAV (P).

Cette phase (b3) en présence de levures pourra être de durée variable. Sa durée dépendra notamment du TAV (P) initial, de la nature et de la quantité de levures additionnées.

Par exemple, pour obtenir une élimination partielle de l'éthanol présent dans le perméat, une durée de 4 à 8 jours pour la phase (b3) pourra être suffisante ; pour une désalcoolisation complète d'un perméat de TAV (P) d'environ 6 % vol., entre 24 et 32 jours seront nécessaires, en fonction de la souche de levure utilisée (voir figures 4a, 4b, 4c).

Le tableau 5 dans la partie expérimentale présente des étapes (b3) ayant duré de 21 à 35 jours, et ayant permis l'obtention d'un TAV d'une valeur inférieure à 0,6% vol. dans tous les cas, et dans presque tous les cas une valeur inférieure à 0,2% vol.

Lors de la réalisation de la phase (b3), des moyens connus de l'Homme du métier seront utilisés pour suivre la métabolisation de l'éthanol. Par exemple, la diminution du poids du milieu (perméat + levures) pourra être suivie au cours du temps : lorsque le poids du milieu se stabilise, cela signifie que la réaction de métabolisation de l'éthanol est complète. Par ailleurs, on peut suivre le débit et le pourcentage de CO₂ en sortie de fermenteur, ou par prélèvement puis par dosage d'éthanol.

Préférentiellement, cette étape (b3) sera réalisée pendant une durée suffisante pour que la valeur de TAV du perméat métabolisé soit inférieure ou égale à 1% vol., plus préférentiellement soit inférieure ou égale à 0,5% vol., et de manière tout à fait préférée qu'elle soit égale à 0% vol.

Ainsi, selon une mise en œuvre particulière du procédé, l'étape (b3) est mise en œuvre jusqu'à consommation complète de l'alcool du perméat, c'est-à-dire jusqu'à ce que la valeur de TAV (P métabolisé) soit inférieure à 0,8% vol., 0,7% vol., 0,6% vol., 0,5% vol., 0,4% vol., 0,3% vol., 0,2% vol. ou encore inférieure à 0,1% vol., voire égale à 0% vol.

Comme indiqué précédemment, le perméat contient majoritairement de l'eau et de l'éthanol ; ainsi, le substrat organique disponible pour les levures est majoritairement l'éthanol.

Le procédé selon l'invention permet avantageusement de (i) conserver au cours du procédé les molécules organiques d'intérêts autres que l'éthanol, comme par exemple le glycérol et l'acide lactique, en effectuant une première étape de séparation physique de l'éthanol et du glycérol, et ainsi en n'offrant aux levures que de l'éthanol à consommer ; et de (ii) favoriser la consommation de l'éthanol par les levures du fait que ce substrat organique est le substrat majoritaire dans le perméat.

Il est entendu que tout type de levures capables de métaboliser l'éthanol en conditions aérobies peut être utilisé pour la mise en œuvre de l'étape (b) du procédé revendiqué. L'Homme du métier saura choisir les espèces de levures et leurs conditions de culture (température, quantité de levures, milieu de culture, etc.) pour optimiser cette consommation de l'éthanol présent dans le perméat.

Plusieurs types de levures capables de consommer de l'éthanol en conditions aérobies sont connus ; en analysant les caractéristiques métaboliques de 439 espèces de levures, Barnett *et al.* (1990) ont identifié 334 espèces capables de se reproduire et de croître en présence d'éthanol comme seule source de carbone. Parmi elles, 250 espèces présentent une croissance normale, ni ralentie ni variable, en particulier l'espèce *Saccharomyces cerevisiae,* mais aussi *Saccharomyces dairensis, Saccharomyces exiguus, Saccharomyces kluyveri, Saccharomyces telluris,* et *Saccharomyces unisporus.*

Selon une mise en œuvre de l'invention, les levures additionnées au perméat lors de l'étape (b) sont du genre *Saccharomyces.*

Selon une mise en œuvre particulière de l'invention, les levures additionnées au perméat lors de l'étape (b) sont de l'espèce *Saccharomyces cerevisiae.*

### Etape (c) optionnelle

Selon une mise en œuvre particulière du procédé selon l'invention, celui-ci comprend une étape de diafiltration du rétentat avec du perméat métabolisé, pour obtenir :
- un « rétentat diafiltré » ayant une valeur de TAV (R diafiltré) inférieure à TAV (R), et
- un « perméat métabolisé diafiltré » ayant une valeur de TAV supérieure à TAV (P métabolisé), ledit perméat métabolisé diafiltré pouvant ensuite être resoumis au procédé de l'étape (b), en particulier pour diminuer sa valeur de TAV.

Cette étape de diafiltration du rétentat permet de diminuer le TAV (R) du rétentat.

Cette étape de diafiltration est réalisée avec un perméat métabolisé ayant une valeur de TAV inférieure à celle du rétentat à diafiltrer.

De préférence, à l'issue de cette étape de diafiltration, le TAV (R diafiltré) du rétentat aura, une valeur d'environ 4% vol., de préférence égale ou inférieure à 4%, ou encore inférieure ou égale à 3% vol., et ce afin d'obtenir, après l'étape (d) d'association avec du perméat métabolisé, un vin désalcoolisé de TAV égal ou inférieur à 0,5% vol. tout en conservant les proportions initiales de rétentat / perméat.

Cette étape optionnelle est mise en place notamment dans le cas où le procédé est mis en œuvre dans le but d'obtenir un vin totalement désalcoolisé présentant une valeur de TAV (2) inférieure à 0,5% vol.

La diafiltration est un processus de dilution qui implique la séparation de certains composants d'un liquide contenant des molécules solubles et filtrables, basée sur le tri des molécules selon leur taille et leur concentration en utilisant des filtres perméables plus ou moins nanométriques.

La diafiltration est en fait une opération « de lavage » dans laquelle un « agent de diafiltration » est apporté, de manière continue ou non, à une solution pour entrainer sélectivement certains composants de la solution ainsi « lavée ». Elle peut être conduite de différentes façons :
- La diafiltration continue, à volume constant : un agent de diafiltration (ici, du perméat métabolisé) est ajouté en continu au même débit que l'écoulement du perméat issu de l'étape (a). L'éthanol est éliminé du rétentat au fur et à mesure que le perméat métabolisé est ajouté.
- La diafiltration séquentielle : l'opération est conduite en mode batch, par une dilution suivie d'une concentration. Le perméat métabolisé est ajouté de manière séquentielle au rétentat avant de re-concentrer ce mélange.

Lorsque cette technique est réalisée de manière séquentielle, on obtient deux nouvelles fractions et en particulier un rétentat dont la valeur de TAV a été abaissée. Cette étape de diafiltration est mise en œuvre autant de fois que nécessaire au regard de l'abaissement recherché de la valeur du TAV.

Avantageusement, cette étape de diafiltration est réalisée au moins deux fois, de préférence au moins trois fois de suite pour abaisser le TAV du rétentat.

Avantageusement, cette diafiltration est réalisée avec la même membrane ou une membrane du même type que celle utilisée pour la séparation membranaire de l'étape (a), c'est-à-dire une membrane présentant un taux de rejet de sels supérieur à 0,9.

Avantageusement, cette étape de diafiltration est réalisée sans aucun apport de liquide exogène, c'est-à-dire sans intrant, en utilisant du perméat métabolisé éventuellement filtré comme agent de diafiltration ; ainsi tous les éléments mis en œuvre dans le procédé sont issus du vin initial. L'emploi d'un agent de diafiltration endogène, car obtenu uniquement à partir du vin initial, est une caractéristique particulièrement remarquable et avantageuse de l'invention.

On désigne par « taux de diafiltration » le nombre de dilutions séquentielles ou continues du rétentat par diafiltration.

### Perméat métabolisé tel qu'obtenu et son utilisation

La présente description concerne également un procédé d'obtention d'un perméat métabolisé, comprenant les étapes suivantes :
a) Séparation d'un vin en deux fractions à l'aide d'une méthode séparative membranaire:
   - Une fraction concentrée d'un facteur k dite « rétentat », le volume de cette fraction étant égal à 1/k V1, cette fraction ayant une valeur de TAV(R);
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P).

La présente description est également relative à un perméat métabolisé susceptible d'être obtenu par la mise en œuvre du procédé décrit ci-dessus.

Ce perméat métabolisé est obtenu à l'étape (b) du procédé décrit dans la présente demande, et présente une valeur de TAV (P métabolisé) inférieure à TAV (P), de préférence inférieure à 1% vol., ou inférieure à 0,8% vol., ou encore inférieure à 0,5% vol., et plus préférentiellement égale à 0% vol.

Selon une alternative, le perméat métabolisé est obtenu à partir d'un mélange de perméats métabolisés obtenus lors de la mise en œuvre répétée des étapes a et b du procédé de l'invention.

Avantageusement, ce perméat métabolisé présente un TAV (P métabolisé) d'une valeur inférieure à 5% vol., inférieure à 4%, inférieure à 3%, inférieure à 2% ou inférieure à 1% vol., inférieure à 0,5 % vol, et plus préférentiellement égale à 0% vol.

La présente description est également relative à l'utilisation de ce perméat métabolisé en tant qu'agent de dilution du perméat lors de l'étape (a') ou en tant qu'agent de diafiltration du rétentat lors de l'étape optionnelle (c).

Dans le cadre de cette utilisation, le perméat métabolisé aura une valeur de TAV inférieure à celle du rétentat à diluer ou à diafiltrer.

Avantageusement, le perméat métabolisé sera filtré avant toute utilisation ultérieure.

Ce perméat métabolisé, éventuellement filtré, peut être utilisé dans la mise en œuvre d'une autre étape du procédé de l'invention : lors de l'étape (d), pour la préparation d'un volume V2 de vin désalcoolisé, en association avec un volume de rétentat, comme cela est détaillé ci-dessous.

### Application du procédé selon l'invention pour la désalcoolisation partielle ou totale d'un vin

Le procédé selon l'invention peut être appliqué pour obtenir des produits finaux différents :
a) pour obtenir un vin partiellement désalcoolisé ; ou
b) pour obtenir un vin totalement désalcoolisé.

Ainsi, selon un premier aspect, l'invention concerne un procédé de désalcoolisation partielle d'un volume V1 de vin.

Ce procédé de désalcoolisation partielle comprend la mise en œuvre des étapes suivantes :
a) Séparation du volume V1 du vin en deux fractions à l'aide d'une méthode séparative membranaire :
   - Une fraction concentrée d'un facteur k dite « rétentat », le volume de cette fraction étant égal à 1/k V1, cette fraction ayant une valeur de TAV(R);
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P); et
d) Association d'un volume de rétentat et d'un volume de perméat métabolisé, pour obtenir un volume V2 de vin désalcoolisé, présentant une valeur de TAV (2) inférieure à TAV (1).

Le vin partiellement désalcoolisé ainsi obtenu aura une valeur de TAV inférieure à celle du vin de départ.

Selon un second aspect, l'invention concerne un procédé de désalcoolisation totale d'un volume V1 de vin.

Ce procédé de désalcoolisation totale (ou complète) d'un volume V1 de vin comprend la mise en œuvre des étapes suivantes :
a) Séparation du volume V1 du vin en deux fractions à l'aide d'une méthode séparative membranaire :
   - Une fraction concentrée d'un facteur k dite « rétentat », le volume de cette fraction étant égal à 1/k V1, cette fraction ayant une valeur de TAV(R);
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) diafiltration du rétentat avec du perméat métabolisé ayant un TAV de valeur égale à 0% vol., pour obtenir :
   - un « rétentat diafiltré » ayant une valeur de TAV (R diafiltré) inférieure à TAV (R), et
   - un « perméat métabolisé diafiltré » ayant une valeur de TAV supérieure à TAV (P métabolisé), ledit perméat métabolisé diafiltré étant ensuite resoumis à l'étape (b) jusqu'à l'obtention d'un TAV de valeur inférieure ou égale à 0,5% vol., de préférence égale à 0% vol.;
d) Association d'un volume de rétentat diafiltré, et d'un volume de perméat métabolisé ayant une valeur de TAV inférieure ou égale à 0,5% vol., de préférence égale à 0% vol., pour obtenir un volume V2 de vin désalcoolisé, présentant une valeur de TAV (2) inférieure ou égale à 0,5% vol.

Dans cette mise en œuvre, le procédé comprend les 4 étapes a, b, c, et d, réalisées de manière successive.

Dans cette mise en œuvre et contrairement à un procédé de désalcoolisation partielle, le perméat métabolisé diafiltré est resoumis à l'étape (b) pour autant que de besoin afin de diminuer son TAV jusqu'à ce que celui-ci présente un TAV (P métabolisé) d'une valeur inférieure ou égale à 0,5%, de préférence égale à 0% vol.

Le vin totalement désalcoolisé ainsi obtenu aura une valeur de TAV inférieure à 0,5% vol.

### Etape (d) d'association de deux fractions

La dernière étape du procédé comprend l'association d'un volume de rétentat, optionnellement diafiltré, et d'un volume de perméat métabolisé, pour obtenir un volume V2 de vin désalcoolisé, présentant une valeur de TAV (2) inférieure à TAV (1).

Le terme « association » est synonyme de réunion, mélange ou encore regroupement, et désigne le fait que les deux fractions préalablement séparées à l'étape (a) sont réunies, en tout ou partiellement, pour constituer un certain volume de vin désalcoolisé.

Selon une mise en œuvre du procédé, le perméat métabolisé est préalablement filtré, pour éliminer tout résidu indésirable dans le vin désalcoolisé de volume V2. Une telle mise en œuvre est bien connue de l'Homme du métier.

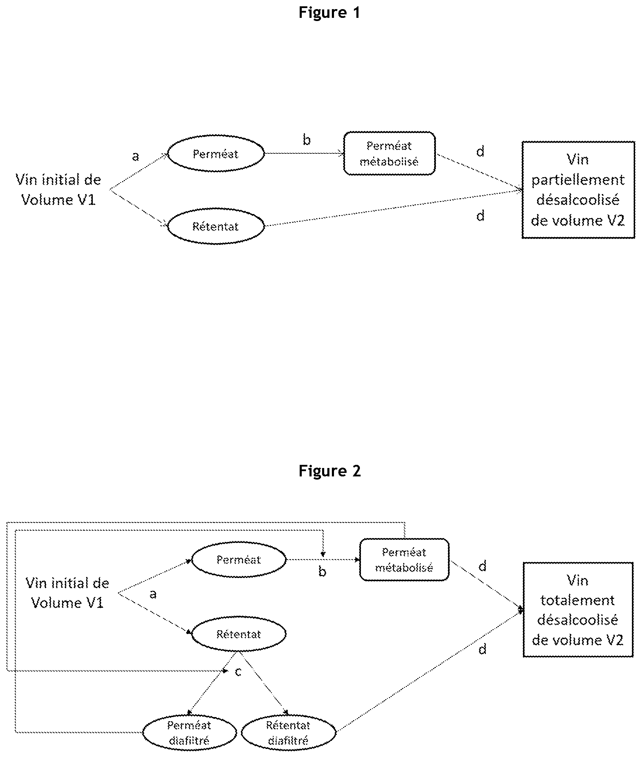

Un procédé complet de désalcoolisation partielle est illustré en figure 1 : dans cet exemple, le vin partiellement désalcoolisé de volume V2, est constitué du perméat métabolisé et du rétentat obtenus lors des étapes a et b.

Un procédé complet de désalcoolisation totale est illustré en figure 2 : dans cet exemple, le vin complètement désalcoolisé de volume V2, est constitué de perméat métabolisé et du rétentat diafiltré obtenus par mise en œuvre des étapes a, b et c.

Selon une mise en œuvre préférée, l'association des deux fractions constituant le volume V2 de vin désalcoolisé est réalisée selon les proportions suivantes :
- le volume du perméat métabolisé, éventuellement filtré, est égal à (k-1)/k V2 ; et
- le volume du rétentat, optionnellement diafiltré, est égal à 1/k V2,
ceci permettant de conserver les proportions de séparation initiale des deux fractions.

L'association des deux fractions constituant le volume V2 de vin désalcoolisé peut être réalisée selon toutes les proportions respectives de rétentat et de perméat métabolisé qui seront jugées avantageuses par l'Homme du métier.

Toutefois, cette association est de préférence réalisée en respectant les proportions respectives de rétentat et de perméat obtenus lors de l'étape (a) du procédé, en fonction du facteur de concentration k appliqué.

En effet, comme l'Homme du métier le comprendra aisément, le procédé selon l'invention s'accompagne fatalement d'une légère perte de volume du vin initial, ceci étant dû aux transferts de liquides successifs.

L'éthanol présent dans le perméat étant métabolisé en eau et CO₂ lors de l'étape (b), selon l'équation chimique suivante :

CH₃-CH₂-OH + 3 O₂ -> 2 CO₂ + 3 H₂O,

la perte de volume liée à l'élimination de l'éthanol est limitée car le volume d'éthanol est partiellement remplacé par le volume d'eau.

Selon une mise en œuvre particulière, le procédé selon l'invention ne comprend pas d'apport exogène d'eau ou d'un autre liquide pour compenser cette perte de volume.

En tout état de cause, afin de conserver au mieux les qualités gustatives du vin désalcoolisé par rapport aux qualités gustatives du vin initial, il est recommandé d'essayer de préserver la typicité du vin initial et en particulier les proportions initiales des composés d'intérêts, et en particulier des composés aromatiques, qui ont été concentrés d'un facteur k dans le rétentat.

Ainsi, dans le cas où k=8, on assemblera 7/8 de perméat métabolisé (issu d'un ou de plusieurs cycles) avec 1/8 de rétentat (issu d'un ou de plusieurs cycles) pour obtenir un vin partiellement ou totalement désalcoolisé, en fonction des TAV du perméat métabolisé et du rétentat utilisés pour l'association.

Le vin désalcoolisé ainsi obtenu présente un TAV (2) de valeur inférieure au TAV du vin initial désigné TAV (1).

Dans le cas d'un procédé de désalcoolisation totale, lors de l'étape (d), on associe de préférence un rétentat diafiltré présentant une valeur de TAV (R diafiltré) inférieure ou égale à 4 % vol., à un perméat métabolisé présentant une valeur de TAV (P métabolisé) égale à 0% vol. Ceci permet de respecter, dans le vin désalcoolisé, les proportions respectives des deux fractions initiales obtenues suite à l'étape de séparation membranaire.

### Différents modes de fonctionnement du procédé de l'invention

Le procédé de l'invention peut notamment être réalisé en mode « batch » ou en mode « fed-batch ».

Lorsque le procédé est réalisé en mode « batch » ou en mode « fed-batch », l'étape (d) d'association des fractions consiste à associer :
- le rétentat obtenu à l'étape (a) qui a été conservé, optionnellement diafiltré, et
- le perméat métabolisé obtenu lors de l'étape (b), éventuellement filtré.

Selon une mise en œuvre de l'invention, l'association des deux fractions constituant le vin désalcoolisé est effectuée en réunissant du perméat métabolisé obtenu lors d'un ou plusieurs cycles successifs, ou au cours d'un procédé précédemment mis en œuvre, et/ou du rétentat (optionnellement diafiltré) obtenu lors d'une ou plusieurs cycles successifs.

Selon une mise en œuvre particulière, tous les perméats métabolisés issus de tous les cycles précédents sont mélangés et ne peuvent donc plus être distingués en fonction du cycle auquel ils ont été obtenus ; dans ce cas, l'expression « perméat métabolisé » désigne une fraction de perméat ayant été soumis à l'étape (b) de métabolisation de l'éthanol, sans distinction de cycle d'obtention.

Selon une mise en œuvre particulière, tous les rétentats issus de tous les cycles précédents sont mélangés et ne peuvent donc plus être distingués en fonction du cycle auquel ils ont été obtenus ; dans ce cas, le terme « rétentat » désigne une fraction de rétentats ayant été obtenus à l'étape (a) de séparation membranaire, éventuellement diafiltré à l'étape (c), sans distinction du cycle d'obtention.

### Mises en œuvre spécifiques du procédé et étapes supplémentaires du procédé

Au sens de l'invention, il est entendu que le procédé comprend les étapes essentielles (a), (b) et (d) mais peut comprendre d'autres étapes, optionnelles, qui peuvent optimiser ou améliorer le procédé revendiqué, telles que les étapes (a') et (c) préalablement présentées.

Selon une mise en œuvre, le procédé comprend les étapes a, b et d du procédé.

Selon une autre mise en œuvre, le procédé consiste en les étapes a, b et d du procédé.

Selon une autre mise en œuvre, le procédé comprend les étapes a, b, c et d du procédé.

Selon une autre mise en œuvre, le procédé consiste en les étapes a, b, c et d du procédé.

Selon une autre mise en œuvre, le procédé comprend les étapes a, a', b, c et d du procédé.

Selon une autre mise en œuvre, le procédé consiste en les étapes a, a', b, c et d du procédé.

Par ailleurs, il pourra être avantageux de rajouter au procédé des étapes supplémentaires permettant d'utiliser chaque fraction obtenue au cours du procédé, en réduisant les déchets inhérents à la mise en œuvre dudit procédé.

Selon une mise en œuvre du procédé, le vin soumis au procédé de l'invention est un vin blanc, un vin rosé ou un vin rouge.

Selon une mise en œuvre du procédé, le vin soumis au procédé de l'invention contient moins de 10 g/L de sucres résiduels.

Selon une mise en œuvre du procédé selon l'invention, le vin soumis au procédé de l'invention est un vin blanc, un vin rosé, un vin rouge, et/ou un vin tranquille ou un vin effervescent, éventuellement préalablement dégazéifié. Il peut notamment s'agir d'un vin de base, c'est-à-dire d'un vin destiné à la production d'un vin effervescent mais avant l'étape de gazéification.

Lorsque le vin soumis au procédé selon l'invention est un vin effervescent, il pourra être avantageux de dégazéifier préalablement ce vin. Selon cette mise en œuvre du procédé selon l'invention, il peut être envisagé, après l'étape (d) d'association, d'introduire du CO₂ dans le vin désalcoolisé obtenu, de volume V2.

Selon une autre mise en œuvre du procédé, il pourra être effectué, après l'étape d'association, une filtration du volume V2 du vin désalcoolisé obtenu, par exemple sur du charbon, pour éliminer d'éventuels composés indésirables.

Toutes ces étapes supplémentaires sont bien connues de l'Homme du métier et ne nécessitent pas d'être explicitées plus en détails.

### Assemblage final du vin désalcoolisé - cas d'un vin mousseux, en particulier d'un champagne

Selon une mise en œuvre particulière, le procédé est réalisé sans l'ajout d'intrant de désalcoolisation, notamment sans ajout d'eau exogène, et ainsi le vin désalcoolisé après association des deux fractions n'est constitué que d'éléments provenant du vin initial.

Ceci est particulièrement avantageux d'un point de vue règlementaire, pour des vins dont les caractéristiques sont définies par des Appellations d'Origine Contrôlées (AOC), caractéristiques qui doivent donc être strictement respectées.

La grande majorité des vins de Champagne est issue d'un assemblage de différents crus, des trois principaux cépages champenois (Chardonnay, Pinot noir et Pinot meunier), issus de vendanges antérieures, incorporés en des pourcentages variables.

Quelle que soit sa spécificité, un assemblage fait presque toujours appel aux trois paramètres précédemment cités : les terroirs, les cépages, les années.

L'assemblage est réalisé par chaque vigneron afin d'obtenir un équilibre, une harmonie particulière entre les différentes caractéristiques recherchées, un style propre.

Les vins de Champagne sont également caractérisés par une fermentation en bouteille qui permet la « prise de mousse » c'est-à-dire la gazéification du vin par la production in situ de CO2 emprisonné dans la bouteille. Il est également possible de procéder à cette gazéification du vin dans des cuves avec du CO₂ exogène, comme c'est le cas pour d'autres vins mousseux qui ne sont pas élaborés par la méthode dite « champenoise », caractérisée en particulier par cette prise de mousse en bouteille.

Le procédé de désalcoolisation selon la présente invention pourra être réalisé sur un vin de Champagne, après son assemblage, tirage, prise de mousse et sa dégazéification; ou pourra être mis en œuvre sur un vin tranquille, avant ou après assemblage, ledit vin tranquille étant destiné à l'obtention d'un vin de Champagne.

L'invention concerne tout particulièrement un procédé de désalcoolisation d'un vin tranquille obtenu par dégazéification d'un vin de Champagne prêt à la consommation.

Le procédé selon l'invention peut également être mise en œuvre sur un vin tranquille destiné à être utilisé dans un assemblage pour obtenir un vin de Champagne ou tout autre type de vin mousseux.

Ainsi, la présente invention concerne un procédé de désalcoolisation d'un volume V1 d'un vin tranquille tel que décrit ci-dessus, présentant un titre alcoométrique volumique (TAV) de valeur TAV (1), comprenant la mise en œuvre des étapes suivantes :
a) Séparation du volume V1 du vin en deux fractions à l'aide d'une méthode séparative membranaire :
   - Une fraction concentrée d'un facteur k dite « rétentat », le volume de cette fraction étant égal à 1/k V1, cette fraction ayant une valeur de TAV(R);
   - Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) Optionnellement, diafiltration du rétentat avec du perméat métabolisé, pour obtenir :
   - un « rétentat diafiltré » ayant une valeur de TAV (R diafiltré) inférieure à TAV (R), et
   - un « perméat métabolisé diafiltré » ayant une valeur de TAV supérieure à TAV (P métabolisé), ledit perméat métabolisé diafiltré étant ensuite optionnellement resoumis à l'étape (b) ;
d) Association d'un volume de rétentat, optionnellement diafiltré, et d'un volume de perméat métabolisé, pour obtenir un volume V2 de vin désalcoolisé présentant une valeur de TAV (2) inférieure à TAV (1).

Toutes les autres mises en œuvre particulières présentées dans la présente demande sont applicables à ce procédé de désalcoolisation de vin tranquille, issu d'un champagne ou destiné à être assemblé pour obtenir un vin de Champagne.

En particulier, ladite désalcoolisation pourra être partielle ou complète.

Après désalcoolisation, le vin tranquille désalcoolisé obtenu pourra être soumis à toute étape nécessaire pour aboutir à un vin mousseux désalcoolisé : assemblage, gazéification, mise en bouteilles, etc.

### EXEMPLES

### Exemple 1. Séparation physique par osmose inverse d'un vin blanc sec en deux fractions, perméat 1 et rétentat 1 (étape a)

L'équipement d'osmose inverse est essentiellement constitué d'une pompe haute pression pouvant délivrer jusqu'à 60 bars et d'une membrane d'osmose inverse de 2,5 pouces de diamètre (Référence : Alfa Laval RO98pHt). 26 m² de membrane ont été installés.

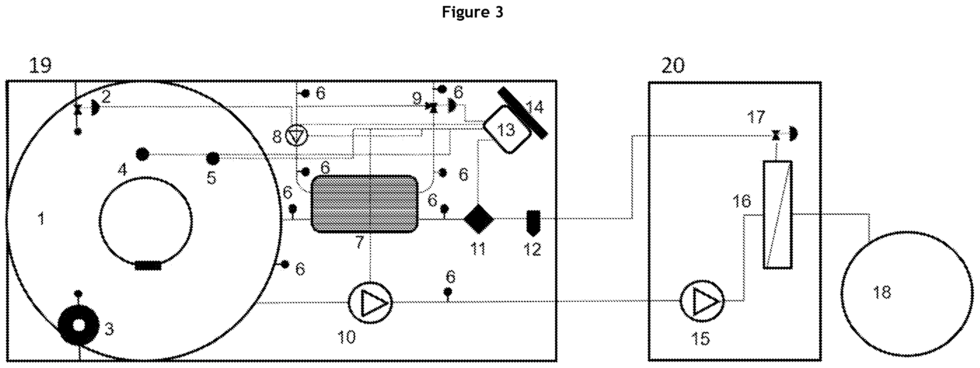

Un schéma de l'équipement est présenté en figure 3.

Le vin utilisé est un vin blanc sec, présentant moins de 10 g/L de sucres résiduels, ayant une valeur de TAV égale à 11,5 % vol.

500 litres de vin sont introduits dans la cuve d'alimentation (1), préalablement inertée. La cuve est ensuite hermétiquement fermée, un ciel de cuve contenant moins de 2% d'O₂ est maintenu par apports successifs d'azote via le détendeur (3).

Le dispositif d'alimentation est ensuite connecté hydrauliquement au dispositif d'Osmose Inverse (OI, rectangle du milieu), et le vin est pompé vers l'équipement d'OI au moyen de la pompe centrifuge (10) du dispositif d'alimentation. Puis la pompe positive (15) du dispositif d'OI est mise en marche pour faire circuler le vin au voisinage de la membrane (16), la portion de vin sortant du dispositif d'OI retournant à la cuve d'alimentation via la crépine (12), le débitmètre massique (11) et l'échangeur à plaque (7). La crépine (12) permet de retenir les cristaux de tartre apparus du fait de la concentration. Le débit mètre massique (11) permet de lire le débit mais aussi la densité, donc de suivre la concentration au fil du process. L'échangeur (7) permet de dissiper l'énergie apportée par la pompe positive (15) et de réguler ainsi la température à environ 15°C de la boucle de rétentat. La pression est obtenue en fermant progressivement la vanne pression (17), typiquement jusqu'à obtenir une pression d'environ 50 bars à l'entrée de la membrane.

Dans cet exemple la séparation est conduite à environ 50 bars de pression maintenue en permanence côté rétentat. L'opération est poursuivie jusqu'à atteindre un FCV (Facteur de concentration volumique) de k=8.

Le débit (L/h/m2) appliqué à la membrane diminue au fur et à mesure de l'écoulement du perméat. La quantité d'éthanol en masse passant dans le perméat est mesurée au cours du temps de façon instantanée avec un densimètre. Le titre éthanol / perméat (% vol.) est calculé à partir du pourcentage massique d'éthanol, en tenant compte de la densité de l'éthanol (789 g/L) c'est-à-dire en divisant le pourcentage massique d'éthanol par 0,789.

Le tableau 2 ci-dessous présente les mesures obtenues lors d'un essai avec une membrane ALFA LAVAL RO98pHt utilisée dans un procédé d'osmose inverse appliqué à un vin blanc sec.

**Tableau 2**

| **Temps (min)** | **Perméat (kg)** | **Titre éthanol perméat (%m/m)** | **Titre éthanol perméat (%vol.)** | **FCV (k)** | **Débit (L/h/m²)** |
|---|---|---|---|---|---|
| 0 | | | | | |
| 10 | 17 | 3,8 | 4,8 | 1,03 | 7,7 |
| 60 | 124 | 4,8 | 6,1 | 1,32 | 5,2 |
| 120 | 223 | 6,1 | 7,7 | 1,77 | 3,4 |
| 180 | 296 | 7,6 | 9,6 | 2,36 | 2,3 |
| 240 | 348 | 9,3 | 11,8 | 3,09 | 1,4 |
| 300 | 387 | 10,7 | 13,6 | 4,04 | 1,4 |
| 360 | 416 | 12,1 | 15,3 | 5,23 | 0,9 |
| 400 | 431 | 13 | 16,5 | 6,18 | 0,9 |
| 410 | 434 | 13,2 | 16,7 | 6,41 | 0,7 |
| 420 | 439 | 12,8 | 16,2 | 6,83 | 1,1 |
| 430 | 443 | 13,1 | 16,6 | 7,22 | 0,9 |

On obtient ainsi 60 litres (L) de rétentat et 440 litres (L) de perméat.

Le TAV du perméat est mesuré de manière instantanée lors de son écoulement, et ne reflète donc pas le TAV final du perméat homogénéisé final, qui est de 10 % vol. On constate toutefois qu'au cours du temps, le TAV du perméat qui s'écoule augmente.

L'expérience a été réalisée également sur du vin blanc moelleux, avec un débit plus faible : les résultats obtenus sont présentés dans l'exemple 13.

### Exemple 2. Procédé selon l'invention avec k = 2 pour obtention d'un vin blanc sec à faible taux d'alcool (désalcoolisation partielle)

Un vin blanc sec présentant un TAV de 11,6 % vol. est traité selon le procédé de l'invention.

La première étape (a) de séparation physique est réalisée à l'aide d'une membrane, par osmose inverse, sous une pression de 50 bars, comme présenté à l'exemple 1.

Le facteur de concentration du rétentat est égal à 2, ce qui permet d'obtenir la répartition suivante :

**Tableau 3**

| **Produit ou fraction** | **Vin** | **Perméat** | **Rétentat** |
|---|---|---|---|
| Volume | 2/2 | 1/2 | 1/2 |
| TAV observé de chaque fraction | 11,6% vol. | 7,73 % vol. | 15,46 % vol. |
| Concentration en éthanol de chaque fraction (g/L) | 91,5 g/L | 61,0 g/L | 122,0 g/L |

L'étape (b) est ensuite conduite de manière à obtenir un perméat présentant une valeur de TAV égale à 0% vol.

Aucune diafiltration du rétentat n'est réalisée.

Lors de l'étape (d) d'association, on assemble la totalité du perméat métabolisé et la totalité du rétentat, selon les proportions suivantes :
- ½ volume de perméat à 0 % vol., et
- ½ volume de rétentat à 15,46 % vol.

On obtient ainsi un volume V2 de vin désalcoolisé présentant un TAV (2) égal à 7,73%, soit d'une valeur égale à 2/3 du TAV (1) initial.

### Exemple 3. Milieu de culture pour les levures utilisées lors de l'étape (b)

Plusieurs types de milieux de culture peuvent être utilisés pour la préculture des levures lors des étapes (b1) et (b2) du procédé.

Le milieu dont la composition est présentée dans le tableau 4 ci-dessous est considéré comme le milieu de culture optimal pour la réalisation du procédé selon l'invention. Le pH de ce milieu est de 3,2. Ce milieu a été préparé à partir d'un milieu synthétique de moût.

**Tableau 4**

| **Composés** | **Quantité** | **Unité** |
|---|---|---|
| Saccharose | 80 | g/kg |
| Sulfate de magnésium | 0,25 | g/kg |
| Sulfate de potassium | 0,5 | g/kg |
| Chlorure de calcium | 0,155 | g/kg |
| Acide tartrique | 5 | g/kg |
| Acide malique | 5 | g/kg |
| DAP (NH4)2HPO4 | 1,749 | g/kg |
| Sulfate de Zinc heptahydrate | 4 | mg/kg |
| Biotin | 3 | µg/kg |
| Pantothénate de Calcium | 1500 | µg/kg |
| Inositol (myo-inositol) | 50000 | µg/kg |
| Thiamine Hydrochloride | 318 | µg/kg |
| **Qsp 1 kg** | Eau | |

### Exemple 4. Etapes de préculture et culture des levures

L'étape (b) se déroule en trois sous-phases, dénommé b1, b2 et b3.

Les deux premières phases permettent de mettre les levures « en condition » pour la phase b3 dénommée phase de métabolisation ou de transformation de l'éthanol du perméat. Les levures acquièrent ainsi une bonne viabilité, une biomasse et accumulent les nutriments nécessaires (par exemple ions, azote, vitamines, lipides désaturés) pour la phase de métabolisation de l'éthanol, qui peut être longue.

Un exemple typique de culture lors des différentes phases est donné ci-dessous :
1. Phase b1 : en Erlenmeyer, avec un bouchon de coton, à partir de LSA (Levures Sèches Actives), à 28°C, sous agitation 150 rpm, pendant 27 h ; le bouchon est perméable donc la culture est réalisée en aérobie « légère ».
2. Phase b2 : en fermenteur, à 23°C, sous agitation 150 rpm, pendant 41,5 h, avec aération selon les conditions suivantes : O₂ 0,004 volume/volume/min (vvm) et N₂ 0,008 vvm.
3. Phase b3 : en fermenteur, à 25°C, sous agitation 150 rpm, avec aération selon les conditions suivantes : O₂ 0,0024 vvm et N₂ 0,0048 vvm.

### Exemple 5. Etape microbiologique (b) réalisée sur un perméat

Les exemples présentés ci-dessous ont été réalisés sur du perméat issu de vin blanc.

Il s'agit d'un perméat à environ 10% vol. d'alcool, issu d'une osmose inverse séparative d'un vin blanc, puis dilué à un TAV de départ d'environ 6% vol. avec ajout d'eau de source (marque Cristaline).

Les levures ont été préalablement cultivées selon les conditions décrites pour les étapes (b1) et (b2) avant leur ajout au perméat, à une concentration d'au moins 2.10⁸ levures par millilitre de perméat.

Les levures testées sont brièvement décrites ci-dessous :
- La souche « LalBrew^{®} Abbaye » est une levure de brasserie belge, de haute fermentation, de l'espèce *Saccharomyces cerevisiae.* Elle est distribuée par la société Lallemand.
- La souche « Vitilevure^{®} DV10 » distribuée par la société Danstar est une levure de l'espèce *Saccharomyces cerevisiae,* utilisée en vinification et pour l'élaboration de vins effervescents (pour la « prise de mousse »).
- La souche IOC Harmonie^{®} est une levure de l'espèce *Saccharomyces cerevisiae,* présentant une forte résistance à l'éthanol, utilisée en vinification. Elle a été sélectionnée par l'Université de Davis en Californie et est connu sous la référence 522 Davis. Elle est distribuée par l'IOC sous la dénomination commerciale Harmonie.

Le tableau 5 ci-dessous présente différents tests de métabolisation de l'éthanol présent dans du perméat.

Deux conditions ont été testées : en mode « batch » et en mode « Fed-batch ».

Les conditions du mode « Batch » sont les suivantes : début dans un fermenteur en plein volume de travail, sur du perméat dilué avec de l'eau Cristalline, pour obtenir une valeur de TAV d'environ 6% vol.

Les conditions du mode « Fed-Batch » sont les suivantes : début dans un fermenteur en volume minimal (40% du volume final du fermenteur) sur du perméat dilué avec de l'eau Cristaline pour obtenir une valeur de TAV d'environ 6% vol. Les ajouts « Fed-Batch » sont faits avec le même perméat sans dilution. Ainsi en conditions Fed-Batch on diminue le volume de diluant. Pendant le processus de métabolisation de l'éthanol, lorsque la valeur de TAV est à environ 0,5% vol., on ajoute du perméat pour remonter la valeur de TAV à 4,6% vol., et ainsi de suite jusqu'à ce que le volume maximum du fermenteur soit obtenu.

**Tableau 5**

| Essai | Volume (L) | Souche de levure testée | Type | TAV début (% vol.) | TAV fin (% vol.) | Durée totale (j) |
|---|---|---|---|---|---|---|
| 98 | 1,2 | Lallbrew Abbaye | Batch | 6,29 | 0,16 | 28 |
| 99 | 1,2 | Danstar DV10 | Batch | 6,22 | 0,13 | 21 |
| 99 | 1,2 | Danstar DV10 | Fed-Batch | 6,57 | 0,12 | 29 |
| 101 | 1,2 | Danstar DV10 | Batch | 6,19 | 0,11 | 35 |
| 106 | 1,2 | IOC Harmonie | Batch | 6,23 | 0,56 | 23 |

La Figure 4a illustre les cinétiques de métabolisation de l'éthanol par les souches de levure *Saccharomyces* cerevisiae, reprenant les données présentées dans le tableau 5 ci-dessus, en mode batch.

La Figure 4b illustre les cinétiques de métabolisation de l'éthanol par la souche DV10, en modes batch et fed-batch.

Un autre essai de métabolisation de l'éthanol d'un perméat issu de vin blanc sec a été réalisé.

Les deux souches utilisées sont des espèces non*-Saccharomyces* :
- Levure Laktia^{™} (*Lachancea thermotolerans*) sélectionnée et commercialisé par Lallemand Œnologie pour augmentation d'acide lactique sur les vinifications, spécialement sur les régions chaudes ;
- Biodiva^{™} (*Torulaspora delbrueckii*) sélectionnée et commercialisé par Lallemand Œnologie pour amélioration de la complexité aromatique et gustative et l'élaboration des vins liquoreux, des vins doux naturels, des vendanges tardives, et des vins de glace.

Les exemples présentés en figure 4c ont été réalisés sur du perméat issu de vin blanc. Il s'agit d'un perméat à environ 10 % vol. d'alcool, issu d'une osmose inverse séparative d'un vin blanc, puis dilué à un TAV de départ comme noté ci-dessous avec ajout d'eau de source (marque Cristaline).

Les levures ont été préalablement cultivées selon les conditions décrites pour les étapes (b1) et (b2) avant leur ajout au perméat, à une concentration d'au moins 2.10⁸ levures par millilitre de perméat.

Pour démarrer l'étape b3, les levures ont été ajoutées à des perméats dont le TAV est égal à:
- 6,23 % vol. d'éthanol pour la souche Laktia^{™}, et
- 1,74 % vol. d'éthanol pour la souche Biodiva^{™};
dans un volume de 1,2 litre (1,2 L) de perméat.

Les conditions de culture sont identiques à celles de l'exemple 4 avec quelques variations, notamment :
- la phase b2 a été conduite à 25°C, avec un débit d'oxygène de 0,008 vvm et d'azote de 0,016 vvm ;
- pendant la phase b3, le débit d'oxygène est de 0,004 vvm et d'azote de 0,008 vvm pour la souche Biodiva^{™}, et d'oxygène de 0,008 vvm et d'azote de 0,016 vvm pour la souche Laktia^{™}.

A la fin de la culture, les levures sont retirées par centrifugation et filtration à 0,2 µm, puis le perméat métabolisé est stocké dans des flacons stérilisés.

Les résultats sont présentés en figure 4c : pour un TAV de départ de valeur égale à 6,23% vol. la durée de l'étape de métabolisation de l'éthanol a été 32 jours pour la souche Laktia^{™} ; pour un TAV de départ de valeur égale à 1,74 % vol. la durée de l'étape de métabolisation de l'éthanol a été de 8 à 11 jours pour la souche Biodiva^{™} mais avec un petit reliquat d'éthanol à 0,2 % vol.

La figure 4c illustre les cinétiques de métabolisation de l'éthanol par les souches non-*Saccharomyces Lachancea thermotolerans et Torulaspora delbrueckii.*

### Exemple 6. Etape microbiologique (b3) réalisée sur un perméat

Un autre essai de métabolisation de l'éthanol du perméat a été réalisé dans les conditions précisées ci-dessous. Les résultats sont présentés en figure 5.

Les souches testées sont toutes de l'espèce *Saccharomyces cerevisiae,* toutes indigènes de la viticole champenoise et toutes connues pour être utilisées pour la vinification d'un champagne, ou plus généralement de vins mousseux vinifiés selon la méthode champenoise :
- Vitilevure DV10^{®} et Levuline CHP^{®}, sélectionnées par le Comité interprofessionnel du vin de Champagne (CIVC) et commercialisées par la société Danstar ; et
- IOC18-2007, sélectionnée et commercialisée par la société Institut Œnologique de Champagne.

Les levures sont ajoutées à du perméat dont le TAV est égal à 2,5 % vol. ou 5 % vol. d'éthanol ; dans un volume de 1,2 litre (1,2 L) de perméat. ; sous agitation à 150 rpm; à 25°C.

Les conditions de culture sont identiques à celles de l'exemple 4 avec quelques variations, notamment : le taux d'ensemencement des levures est de 3 à 4.10⁸ levures par millilitre, avec un débit d'oxygène de 0,007 vvm et d'azote de 0,016 vvm.

A la fin de la culture, les levures sont retirées par centrifugation et filtration à 0,2 µm, puis le perméat métabolisé est stocké dans des flacons stérilisés.

Les résultats sont présentés en figure 5 : pour le perméat présentant un TAV de départ de valeur 2,5% vol., 5 à 6 jours sont suffisants pour obtenir une valeur de TAV égale à 0% vol. ; pour un TAV de départ de valeur égale à 5% vol., la durée de l'étape de métabolisation de l'éthanol est comprise entre 10 et 12 jours, selon la souche de levure utilisée.

### Exemple 7. Diafiltration du rétentat avec du perméat métabolisé comme agent diafiltrant

Cet exemple illustre l'étape optionnelle (c) du procédé selon l'invention, qui est mise en œuvre selon un mode particulièrement préféré de l'invention.

La diafiltration du rétentat est ici réalisée avec l'agent diafiltrant préféré selon l'invention, un perméat métabolisé avec une valeur de TAV de 0 % vol., à une pression d'environ 50 bars, jusqu'à atteindre un taux de diafiltration de 1. Il s'agit d'une mesure instantanée, les valeurs présentées ci-dessous ne représentent donc pas le résultat final.

**Tableau 6**

| **Temps (min)** | **En entrée : Masse de perméat métabolisé (agent diafiltrant) (kg)** | **En sortie : Masse de perméat métabolisé diafiltré (kg)** | **Titre éthanolique perméat métabolisé diafiltré (%m/m)** | **Débit (L/h/m²)** | **Taux de diafiltration** |
|---|---|---|---|---|---|
| 0 | | | | | |
| 10 | 5,65 | 4 | 12,4 | 0,9 | 0,06 |
| 20 | 11,2 | 8 | 11,8 | 0,9 | 0,13 |
| 30 | 16,65 | 12 | 10,8 | 0,9 | 0,19 |
| 40 | 22,15 | 17 | 9,9 | 1,1 | 0,27 |
| 50 | 27,65 | 22 | 9 | 1,1 | 0,34 |
| 60 | 33,15 | 27 | 8,2 | 1,1 | 0,42 |
| 70 | 38,65 | 32 | 7,6 | 1,1 | 0,50 |
| 80 | 44,1 | 38 | 7 | 1,4 | 0,59 |
| 90 | 49,6 | 44 | 6,4 | 1,4 | 0,69 |
| 100 | 55,1 | 50 | 6 | 1,4 | 0,78 |
| 110 | 60,5 | 56 | 5,7 | 1,4 | 0,88 |
| 120 | 64 | 64 | 5,3 | 1,4 | 1,00 |

Cette étape de diafiltration peut être réalisée le nombre de fois nécessaire, de façon à obtenir un rétentat présentant le TAV souhaité.

### Exemple 8. Métabolisation de l'éthanol par des levures après dilution du perméat avec du perméat métabolisé, utilisé comme agent de dilution

Un autre essai de métabolisation de l'éthanol du perméat issu de vin blanc sec a été réalisé dans les conditions précisées ci-dessous. Les résultats sont présentés en figure 6.

Les exemples présentés ci-dessous ont été réalisés sur du perméat issu de vin blanc. Il s'agit d'un perméat à environ 10% vol. d'alcool, issu d'une osmose inverse séparative d'un vin blanc, puis dilué avec ajout de perméat 0 % vol. issu d'un cycle de désalcoolisation préalable, de façon à ajuster le degré d'alcool du mélange à 6,25 % vol.

Les souches testées sont toutes de l'espèce *Saccharomyces cerevisiae* :
- La souche Vitilevure EC-1118^{®} est une levure de l'espèce *Saccharomyces cerevisiae,* utilisée pour la sécurité fermentaire et la prise de mousse et commercialisée par la société Danstar,
- La souche Zyamaflore Delta^{®} est une levure de l'espèce *Saccharomyces cerevisiae* commercialisée par la société Laffort,
- La souche Lalvin ICV D80 est une levure de l'espèce *Saccharomyces cerevisiae* sélectionné en Côte Rôtie pour développer les caractères aromatiques et gustatifs concentrés et puissants des vins rouges méditerranéens,
- La souche ICV K1 est une levure de l'espèce *Saccharomyces cerevisiae* sélectionnée en Languedoc pour améliorer la sécurité de la fermentation alcoolique dans les conditions difficiles, ces deux dernières souches étant commercialisée par l'Institut Coopératif du Vin,
- La souche IOC Prestige est une levure de l'espèce *Saccharomyces cerevisiae* sélectionnée pour sa fermentation des vins rouges avec respect du terroir, et commercialisée par la société Institut Œnologique de Champagne.

Les levures ont été préalablement cultivées selon les conditions décrites pour les étapes (b1) et (b2) avant leur ajout au perméat, à une concentration d'au moins 2.10⁸ levures par millilitre de perméat. Les conditions de culture sont identiques à celles de l'exemple 4 avec quelques variations, notamment :
- la phase b2 a été conduit à 25°C, avec un débit d'oxygène de 0,008 vvm et d'azote de 0,016 vvm ;
- lors de la phase b3, le débit d'oxygène est de 0,004 vvm et d'azote de 0,008 vvm.

Pour démarrer l'étape b3 les levures ont été ajoutées à un perméat dont le TAV est égal à 6,25 % vol. d'éthanol ; dans un volume de 1,2 litre (1,2 L) de perméat ; sous agitation à 150 rpm; à 25°C.

A la fin de la culture, les levures sont retirées par centrifugation et filtration à 0,2 µm, puis le perméat métabolisé est stocké dans des flacons stérilisés.

Les résultats sont présentés en figure 6 : pour un TAV de départ de valeur égale à 6,25% vol., la durée de l'étape de métabolisation de l'éthanol est comprise entre 25 et 39 jours, selon la souche de levure utilisée.

Un autre essai de métabolisation de l'éthanol des perméats issus de vin blanc, de vin rosé, de vin rouge a été réalisé dans les conditions précisées ci-dessous. Les résultats sont présentés en figure 7.

Cette métabolisation a été réalisée sur différents perméats issus de vin blanc, de vin rosé, de vin rouge par macération, ou de vin rouge par thermovinification.

Il s'agit pour chacun d'un perméat à environ 10% vol. d'alcool, issu d'une osmose inverse séparative, puis dilué avec ajout de perméat 0 % vol. issu d'un cycle de désalcoolisation préalable de façon à ajuster le degré d'alcool du mélange à 6,25 % vol.

Les deux souches testées sont de l'espèce *Saccharomyces cerevisiae* :
- Vitilevure DV10^{®} sélectionné par le Comité inter- professionnel du vin de Champagne (CIVC) et commercialisée par la société Danstar ; et
- IOC18-2007, sélectionnée et commercialisée par la société Institut Œnologique de Champagne.

Les levures ont été préalablement cultivées selon les conditions décrites pour les étapes (b1) et (b2) avant leur ajout au perméat, à une concentration d'au moins 2.10⁸ levures par millilitre de perméat. Les conditions de culture sont identiques à celles de l'exemple 4 avec quelques variations, notamment :
- la phase b2 a été conduit à 25°C, avec un débit d'oxygène de 0,008 vvm et d'azote de 0,016 vvm ;
- lors de la phase b3, le débit d'oxygène est de 0,004 vvm et d'azote de 0,008 vvm.

Pour démarrer l'étape b3 les levures sont ajoutées à un perméat dont le TAV est égal à 6,25 % vol. d'éthanol ; dans un volume de 1,2 litre (1,2 L) de perméat.

A la fin de la culture, les levures sont retirées par centrifugation et filtration à 0,2 µm, puis le perméat métabolisé est stocké dans des flacons stérilisés.

Les résultats sont présentés en figure 7 : pour un TAV de départ de valeur égale à 6,25% vol., la durée de l'étape de métabolisation de l'éthanol est comprise entre 22 et 58 jours, selon la souche de levure utilisée et le type de perméat.

### Exemple 9. Procédé complet de désalcoolisation totale d'un vin blanc sec et caractérisation des propriétés organoleptiques des différentes fractions (rétentat, perméat, perméat métabolisé) et du vin désalcoolisé obtenu, à l'aide de paramètres physico-chimiques et de commentaires de dégustation

Toutes les fractions produites et utilisées dans cet exemple (perméat, perméat filtré, rétentat, rétentat diafiltré...) sont issues d'un seul lot de vin mais de plusieurs cycles différents.

Les valeurs indiquées dans cet exemple sont des approximations à une seule décimale des valeurs effectivement mesurées, sauf dans les tableaux.

### • Etape (a) :

### Préparation du perméat (cycle 1)

516 kg de vin blanc sec à 11,3 % vol. sont soumis aux conditions de l'étape a) telles que décrites dans l'exemple 1 et permettent d'obtenir 451 kg de perméat à 9,2 % vol. et 52,4 kg de rétentat à 20,5 % vol. C'est ce perméat qui sera utilisé dans la suite de l'exemple.

### Préparation du rétentat (cycle 2)

514 kg de vin blanc sec à 11,3 % vol. sont soumis aux conditions de l'étape a) telles que décrites dans l'exemple 1 et permettent d'obtenir 449,5 kg de perméat à 9,7 % vol. et 64 kg de rétentat à 21,7 % vol. C'est ce rétentat qui sera utilisé dans la suite de l'exemple.

### • Etape (a') : diminution du TAV du perméat

38,6 kg du perméat à 9,2 % vol. (issus de l'étape (a) cycle 1) ont été mélangés à 11,2 kg d'un perméat métabolisé (de TAV égal à 0 % vol.) et filtré issu d'un cycle de désalcoolisation préalable de façon à ajuster le degré d'alcool du mélange à 7,1 % vol.

### • Etape (b) : élimination de l'éthanol du perméat

La métabolisation de l'éthanol de ce perméat selon l'étape (b3) est conduite dans les conditions de l'exemple 6 à l'aide d'une souche 522 Davis (Saccharomyces cerevisiae), commercialisée par l'IOC (Institut Œnologique de Champagne) sous la dénomination Harmonie^{®}.

La préculture et culture de ces levures selon les étapes (b1), (b2) et (b3) est réalisée comme décrit dans les exemples 3 et 4.

43,9 kg de perméat métabolisé à 0 % vol. ont été obtenus. Après filtration de ce perméat métabolisé, on obtient 38,9 kg de perméat métabolisé filtré.

### • Etape (c) : diafiltration du rétentat

Une série de diafiltrations du rétentat est alors réalisée dans les conditions de l'exemple 7 afin de diminuer le TAV du rétentat pour atteindre une valeur de TAV environ égale à 4% vol.

Pour ce faire, 64 kg de rétentat obtenu à l'issue de l'étape (a) (cycle2) sont diafiltrés avec 256 kg de perméat métabolisé filtré issu d'un cycle de désalcoolisation préalable, pour obtenir 64 kg de rétentat diafiltré à 4,2% vol. et 256 kg de perméat métabolisé diafiltré à 5,3% vol.

### • Etape (d) association de 2 fractions

Un vin désalcoolisé ayant un TAV d'environ 0,5 % vol. est obtenu selon l'étape (d) en reconstituant par mélange des volumes ces deux fractions afin d'obtenir le TAV désiré, soit 4,98 kg de rétentat diafiltré et 33,98 kg de perméat métabolisé à 0 % vol. Après homogénéisation et filtration, 35,21 kg de vin désalcoolisé à 0,5 % vol. ont été obtenus.

Des analyses par chromatographie (HPLC sur un appareil commercialisé par Biorad) ont été réalisées pour connaitre les teneurs en sucres, acides organiques, alcools et acides aminés des différentes fractions obtenues lors du procédé de l'invention.

Des analyses par ICP-MS ont été réalisées pour connaitre les teneurs en éléments minéraux (Li, B, NA, Mg, Al, K, Ca, Sc, V, Cr, Mn, Fe, Co, Ni, Cu, Zn, As, Rb, Sr, Mo, Cd, Sb, Ba, Pb). Les résultats sont présentés en figure 8B.

Enfin, des analyses semi quantitatives des composés organiques volatils et semi-volatils ont été réalisées par SBSE-GC-TOF/MS : les résultats sont présentés en figure 8C. Pour obtenir ce graphique, chaque composé a été dosé de façon semi-quantitative (résultats en concentration équivalent 3-octanol en µg/L). Les molécules dosées ont été rassemblées en fonction de la note aromatique qui les caractérisent, et leurs concentrations ont été additionnées. La concentration de chaque famille aromatique est ainsi évaluée. La présentation des résultats en logarithme décimal (log₁₀) permet de mettre en exergue les différences significatives de concentrations.

Les différentes fractions intermédiaires, ainsi que le vin initial et le vin désalcoolisé obtenu, ont été analysés. Pour rappel :
- Le vin initial ; il s'agit d'un vin blanc sec, ayant un TAV égal à 11,3 % vol., issu d'un assemblage de vins de base et destiné à la prise de mousse,
- Le rétentat ayant un TAV de 21,7 % vol., issu de l'étape (a),
- Le rétentat diafiltré ayant un TAV égal à 4,2 % vol., issu de l'étape (c) de diafiltration,
- Le perméat ayant un TAV de 9,2 % vol., obtenu à l'issue de l'étape (a),
- Le perméat métabolisé ayant un TAV de 0% vol., issu de l'étape (b),
- Le perméat métabolisé filtré ayant un TAV de 0% vol., et
- Le vin désalcoolisé présentant un TAV égal à 0,5% vol.

Les résultats sont présentés dans les tableaux 7 (sucres, acides organiques, alcool) et 8 (acides aminés particuliers) ci-dessous. Les chiffres entre parenthèses indiquent la proportion du composant par rapport à sa quantité mesurée dans le vin initial. La figure 8A illustre les résultats du tableau 7.

**Tableau 7**

| Matière | Vin initial | Rétentat | Rétentat diafiltré | Perméat | Perméat métabolis é | Perméat métabolis é filtré | Vin 0-029 désalcooli sé |
|---|---|---|---|---|---|---|---|
| Densité à 20°C g/cm³ | 0,9889 | | 1,0233 | 0,9859 | 1,0036 | 0,9979 | 1,0008 |
| TAV % vol. (fraction) | 11,3 (1,00) | 21,7 (1,90) | 4,2 (0,37) | 9,2 (0,80) | 0,0 (0,00) | 0,0 (0,00) | 0,5 (0,04) |
| Glucose g/L (fraction) | 0,173 (1,0) | 0,822 (4,7) | 0,857 (4,9) | 0,009 (0,05) | 0,000 (0,0) | 0,000 (0,0) | 0,147 (0,8) |
| Fructose g/L (fraction) | 0,437 (1,0) | 2,615 (6,0) | 2,939 (6,73) | 0,008 (0,02) | 0,000 (0,0) | 0,000 (0,0) | 0,359 (0,82) |
| Glycérol g/L (fraction) | 4,909 (1,0) | 27,751 (5,7) | 28,824 (5,9) | 0,350 (0,1) | 1,041 (0,2) | 0,0061 (0,0) | 3,540 (0,7) |
| Acide lactique g/L (fraction) | 2,820 (1,0) | 15,956 5,7) | 15,585 (5,5) | 0.380 (0,1) | 0,005 (0,0) | 0,001 (0,0) | 1,898 (0,7) |
| Acide malique g/L (fraction) | 0,007 (1,0) | 0,133 (18,7) | 0,041 (5,8) | 0,000 (0,0) | 1,434 (202,0) | 0,000 (0,0) | 0,006 (0,8) |
| Acide tartrique g/L (fraction) | 2,810 (1,0) | 11,883 (4,2) | 11,779 (4,2) | 0,052 (0,02) | 0,029 (0,0) | 0,001 (0,0) | 1,446 (0,5) |
| Acide acétique g/L (fraction) | 0,154 (1,0) | 0,308 (2,0) | 0,088 (0,6) | 0,116 (0,8) | 0,000 (0,0) | 0,002 (0,0) | 0,012 (0,1) |
| Acide succiniqu e g/L (fraction) | 0,280 (1,0) | 1,696 (6,1) | 1,689 (6,0) | 0,032 (0,1) | 11,526 (41,1) | 0,035 (0,1) | 0,218 (0,8) |
| Acide citrique g/L (fraction) | 0,221 (1,0) | 2,200 (10,0) | 1,787 (8,1) | 0,003 (0,01) | 0,367 (1,7) | 0,000 (0,0) | 0,194 (0,9) |
| Acide shikimiqu e g/L (fraction) | 0,016 (1,0) | 0,098 (6,2) | 0,097 (6,2) | 0,0003 (0,02) | 0,002 (0,1) | 0,000 (0,0) | 0,013 (0,8) |
| Acides isovalériq ue et pyruvique g/L (fraction) | 0,019 (1,0) | 0,083 (4,4) | 0,022 (1,2) | 0,000 (0,0) | 0,111 (6,0) | 0,000 (0,0) | 0,035 (1,9) |
| Total acides aminés mg/L (fraction) | 717 (1,0) | ND* | 906 (1,3) | ND* | 0 (0,0) | 0 (0,0) | 510 (0,7) |

| | | | | | | | |
|---|---|---|---|---|---|---|---|
| * Non défini | | | | | | | |

**Tableau 8**

| Acide aminé | Vin initial | Rétentat diafiltré | Perméat métabolisé | Perméat métabolisé filtré | Vin 0-029 désalcoolisé |
|---|---|---|---|---|---|
| Proline mg/L (fraction)* | 170,12 (1,00) | 208,8 (1,23) | 0,00 (0,00) | 0,00 (0,00) | 217,45 (1,28) |
| Acide gammaamino butyrique mg/L (fraction) | 61,12 (1,00) | 60,02 (0,98) | 0,00 (0,00) | 0,00 (0,00) | 35,06 (0,57) |
| Asparagine mg/L (fraction) | 32,39 (1,00) | 48,97 (1,51) | 0,00 (0,00) | 0,00 (0,00) | 18,52 (0,57) |
| Ornithine mg/L (fraction) | 36,72 (1,00) | 48,60 (1,32) | 0,00 (0,00) | 0,00 (0,00) | 20,83 (0,57) |
| Alanine mg/L (fraction) | 47,12 (1,00) | 59,56 (1,26) | 0,00 (0,00) | 0,00 (0,00) | 26,18 (0,56) |
| Glycine mg/L (fraction) | 17,76 (1,00) | 24,24 (1,36) | 0,00 (0,00) | 0,00 (0,00) | 10,03 (0,56) |
| Lysine mg/L (fraction) | 59,25 (1,00) | 66,66 (1,13) | 0,00 (0,00) | 0,00 (0,00) | 32,54 (0,55) |
| Glutamate mg/L (fraction) | 46,92 (1,00) | 58,01 (1,24) | 0,00 (0,00) | 0,00 (0,00) | 25,5 (0,54) |
| Phénylalanin e mg/L (fraction) | 27,33 (1,00) | 44,23 (1,62) | 0,00 (0,00) | 0,00 (0,00) | 14,84 (0,54) |
| Sérine mg/L (fraction) | 14,43 (1,00) | 21,45 (1,49) | 0,00 (0,00) | 0,00 (0,00) | 7,76 (0,54) |
| Arginine mg/L (fraction) | 40,71 (1,00) | 70,37 (1,73) | 0,00 (0,00) | 0,00 (0,00) | 21,76 (0,53) |
| Leucine mg/L (fraction) | 43,09 (1,00) | 14,00 (0,32) | 0,00 (0,00) | 0,00 (0,00) | 23,03 (0,53) |
| Valine mg/L (fraction) | 14,37 (1,00) | 21,24 (1,48) | 0,00 (0,00) | 0,00 (0,00) | 7,60 (0,53) |
| Méthionine mg/L (fraction) | 6,33 (1,00) | 10,22 (1,61) | 0,00 (0,00) | 0,00 (0,00) | 3,29 (0,52) |
| Thréonine mg/L (fraction) | 11,42 (1,00) | 17 (1,49) | 0,00 (0,00) | 0,00 (0,00) | 5,93 (0,52) |
| Tyrosine mg/L (fraction) | 21,07 (1,00) | 31,94 (1,52) | 0,00 (0,00) | 0,00 (0,00) | 10,95 (0,52) |
| Histidine mg/L (fraction) | 13,31 (1,00) | 22,17 (1,67) | 0,00 (0,00) | 0,00 (0,00) | 6,85 (0,51) |
| Isoleucine mg/L (fraction) | 9,01 (1,00) | 32,84 (3,64) | 0,00 (0,00) | 0,00 (0,00) | 4,41 (0,49) |
| Aspartate mg/L (fraction) | 34,04 (1,00) | 35,87 (1,05) | 0,00 (0,00) | 0,00 (0,00) | 15,38 (0,45) |
| Citrulline mg/L (fraction) | 5,75 (1,00) | 7,61 (1,32) | 0,00 (0,00) | 0,00 (0,00) | 2,15 (0,37) |
| Cystéine mg/L (fraction) | 0,86 (1,00) | 0,00 (0,00) | 0,00 (0,00) | 0,00 (0,00) | 0,00 (0,00) |
| Tryptophane mg/L (fraction) | 3,39 (1,00) | 1,02 (0,30) | 0,00 (0,00) | 0,00 (0,00) | 0,00 (0,00) |
| Total | 716,5 (1,00) | 905,8 (1,26) | 0,00 (0,00) | 0,00 (0,00) | 510,10 (0,71) |

En ce qui concerne les composés d'intérêt, c'est-à-dire les composés ayant un impact organoleptique, le vin reconstitué a conservé, par rapport au vin initial, environ 80 % des sucres, 70% du glycérol et de l'acide lactique, 80% d'acide malique mais seulement 50% de l'acide tartrique.

Le vin désalcoolisé a aussi conservé 80 à 90 % des acides organiques fermentaires (acide citrique, succinique et shikimique), mais seulement 10% de l'acide acétique, ce qui peut être considéré comme une petite amélioration de la qualité.

Par contre, la concentration des acides isovalérique et pyruvique a été augmentée de deux fois dans le vin désalcoolisé, mais cela n'a pas été perçu comme un défaut lors de la dégustation du vin désalcoolisé.

Le vin reconstitué n'a conservé que 70% des acides aminés par rapport au vin initial (voir Tableaux 7 et 8).

En ce qui concerne chaque acide aminé (alanine, arginine, asparagine, aspartate, glutamate, glutamine, glycine, histidine, leucine, lysine, phénylalanine, sérine, thréonine, tyrosine, valine et acide gamma-aminobutyrique) pour chacun il y a eu une diminution de la quantité dans le vin reconstitué, sauf pour la proline, l'acide aminé avec la concentration la plus élevée (170 mg/L) dans le vin initial, qui est présente à 128% de sa concentration d'origine dans le vin reconstitué. Enfin, les acides aminés tryptophane (à 3,4 mg/L) et cystéine (à 0,9 mg/L) sont absents dans le vin reconstitué, et l'isoleucine est conservée à 49% de sa concentration dans le vin initial.

En ce qui concerne les composés non souhaitables d'un point de vue aromatique, le vin désalcoolisé présente des concentrations inférieures à celles du vin initial pour les composés suivants :
- Le composant acétate d'éthyle (odeur de solvant) a une concentration de 13,7 mg/L dans le vin initial, mais il est absent du vin désalcoolisé (0 mg/L) ;
- Le 2-méthyl-1-propanol (isobutanol, arôme de verdure) est présent à 13 mg/L dans le vin initial, mais seulement à une concentration égale à 68 % de cette valeur (8,8 mg/L) dans le vin désalcoolisé;
- Le lactate d'éthyle (arôme lacté) est présent à une concentration de 59,6 mg/L dans le vin initial, mais seulement à une concentration égale à 31 % de cette valeur dans le vin désalcoolisé (18,7 mg/L).

En ce qui concerne les éléments minéraux, les distributions des composés dans le vin initial et dans le vin désalcoolisé reconstitué sont très proches, comme cela est illustré en figure 8B. La part respective de chaque composé est conservée tout au long du process
Comme cela est illustré en figure 8C, le profil aromatique du vin désalcoolisé est très proche, quasi superposable, à celui du vin d'origine.

Il apparait clairement sur le graphique ainsi obtenu que la part respective de chaque famille aromatique est conservée au cours du procédé de désalcoolisation.

Une dégustation à l'aveugle par un panel de dégustateurs professionnels avertis a permis de réaliser une analyse sensorielle (dont le résultat est retranscrit en texte libre pour tenir compte du ressenti des dégustateurs) du vin initial et du vin désalcoolisé une fois assemblé afin de les comparer.

Les résultats sont présentés dans le tableau 9 ci-dessous.

**Tableau 9**

| | Vin initial | Vin désalcoolisé | Commentaires |
|---|---|---|---|
| Sans CO₂ | Couleur jaune pâle dorée | Couleur jaune pâle | La couleur semble légèrement modifiée (moins brillante, moins dorée) et l'aromatique semble un peu moins complexe. |
| | Fruits blancs croquants (pomme, pomme verte, poire) | Fruits blancs croquants (pomme, poire) | |
| | Fraicheur, agrumes Acidulé, citrique | Fraicheur, agrumes Acidulé, citrique | |
| Avec CO₂ | Couleur jaune pâle dorée | Couleur jaune pâle | Idem sur la couleur |
| | Fruits blancs croquants (pomme, pomme verte, poire) | Fruits blancs croquants (pomme verte), rhubarbe | Idem sur la complexité aromatique |
| | Fraicheur, agrumes | Fraicheur, agrumes | |
| | Notes empyreumatiques (pain grillé...) | Notes empyreumatiques (croute de pain...) | L'effervescence exhauste les perceptions en bouche (amertume, acidité). Ces caractères sont moins complexes dans le vin désalcoolisé. |
| | Acidulé, citrique | | |
| | Amertume plus intense | Acidulé, citrique | |
| | Acidité plus complexe | | |

Cette analyse sensorielle permet de conclure que les vins alcoolisé ou désalcoolisé ont un profil similaire et que la proximité de leurs univers aromatiques démontre bien une bonne préservation des composés d'intérêts et tout particulièrement des composés aromatiques grâce au procédé selon l'invention.

### Exemple 10. Procédé complet de désalcoolisation totale d'un vin rosé et caractérisation du vin rosé initial et du vin rosé désalcoolisé obtenu, à l'aide de paramètres physicochimiques

Toutes les fractions produites et utilisées dans cet exemple (perméat, perméat filtré, rétentat, rétentat diafiltré...) sont issues d'un seul lot de vin rosé mais de plusieurs cycles différents.

Les valeurs indiquées dans cet exemple sont des approximations à une seule décimale des valeurs effectivement mesurées, sauf dans les tableaux.

### • Etape (a) : Préparation des perméats et rétentats

### ▪ Cycle 1

136 kg de vin rosé à 10,9 % vol. sont soumis aux conditions de l'étape (a) telles que décrites dans l'exemple 1 et permettent d'obtenir 119 kg de perméat à 8,6 % vol. et 11,35 kg de rétentat à 21,8 % vol.

### ▪ Cycle 2

136 kg de vin rosé à 11 % vol. sont soumis aux conditions de l'étape (a) telles que décrites dans l'exemple 1 et permettent d'obtenir 119 kg de perméat à 8,5 % vol. et 11,9 kg de rétentat à 21,9 % vol.

### • Etape (a') : diminution du TAV des perméats

1,101 kg du perméat à 7,82 % vol. (issus de l'étape (a) cycle 1) ont été mélangés à 0,28590 kg d'un perméat métabolisé (de TAV égal à 0 % vol.) et filtré issu d'un cycle de désalcoolisation préalable de façon à ajuster le degré d'alcool du mélange à 6,25 % vol.

### • Etape (b) : élimination de l'éthanol des perméats

La métabolisation de l'éthanol de ce perméat selon l'étape (b3) est conduite dans les conditions de l'exemple 6 à l'aide d'une souche *Saccharomyces cerevisiae,* commercialisée par IOC sous la dénomination IOC2007^{®}.

La préculture et culture de ces levures selon les étapes (b1), (b2) et (b3) est réalisée comme décrit dans les exemples 3 et 4.

0,850 kg de perméat métabolisé à 0 % vol. ont été obtenus. Après filtration de ce perméat métabolisé, on obtient 0,830 kg de perméat métabolisé filtré.

### • Etape (c) : diafiltration des rétentats

Les rétentats issus des cycles 1 et 2 sont mélangés.

Une série de diafiltrations de cet assemblage de rétentats est alors réalisée dans les conditions de l'exemple 7 afin de diminuer le TAV du rétentat pour atteindre une valeur de TAV environ égale à 4% vol.

Pour ce faire, 17,35 kg de rétentat obtenu à l'issue de l'étape (a) (cycles 1 et 2) sont diafiltrés avec 69,4 kg de perméat métabolisé filtré issu d'un cycle de désalcoolisation préalable, pour obtenir 14,35 kg de rétentat diafiltré à 3,8 % vol. et 69,4 kg de perméat métabolisé diafiltré à 4,8% vol.

### • Etape (d) association de 2 fractions issues de vin rosé

Un vin désalcoolisé ayant un TAV d'environ 0,5 % vol. est obtenu selon l'étape (d) en reconstituant par mélange des volumes ces deux fractions afin d'obtenir le TAV désiré, soit 0,025 kg de rétentat diafiltré et 0,175 kg de perméat métabolisé à 0 % vol. Après homogénéisation et filtration, 0,2 kg de vin désalcoolisé à 0,5 % vol. ont été obtenus.

Des analyses par chromatographie (HPLC sur un appareil commercialisé par Biorad) ont été réalisées pour connaitre les teneurs en sucres, acides organiques et alcools.

Des analyses semi quantitatives des composés organiques volatils et semi-volatils ont été réalisées par SBSE-GC-TOF/MS.

Des analyses par ICP-MS ont été réalisées pour connaitre les teneurs en éléments minéraux (Li, B, NA, Mg, Al, K, Ca, Sc, V, Cr, Mn, Fe, Co, Ni, Cu, Zn, As, Rb, Sr, Mo, Cd, Sb, Ba, Pb).

Le vin initial et le vin désalcoolisé obtenu, ont été analysés. Pour rappel :
- Le vin initial ; il s'agit d'un vin rosé, ayant un TAV égal à 10,9 % vol., issu d'un assemblage de vins de base et destiné à la prise de mousse,
- Le vin désalcoolisé présentant un TAV égal à 0,5% vol.

Les résultats sont présentés dans le tableau 10 ci-dessous et la figure 9A (sucres, acides organiques, alcool) ainsi que dans les figures 9B (charge minérale moyenne) et 9C (profils aromatiques). Dans le tableau ci-dessous, les chiffres entre parenthèses indiquent la proportion du composant par rapport à sa quantité mesurée dans le vin initial.

**Tableau 10 (sucres, acides organiques, alcools)**

| **Matière** | **Vin rosé initial** | **Vin rosé désalcoolisé** |
|---|---|---|
| TAV % vol. (Fraction) | 10,9 (1) | 0,55 (0,05) |
| Acide citrique g/L (Fraction) | 0,45 (1) | 0,1 (0,65) |
| Acide L-malique g/L (Fraction) | 1,98 (1) | 1,02 (0,51) |
| Glucose g/L (Fraction) | 0,28 (1) | 0,21 (0,74) |
| Fructose g/L (Fraction) | 0,61 (1) | 0,44 (0,72) |
| Acide succinique g/L (Fraction) | 1,44 (1) | 0,94 (0,65) |
| Acide shikimique g/L (Fraction) | 0,02 (1) | 0,02 (0,74) |
| Acide fumarique g/L (Fraction) | 0,00 (1) | 0,00 (0,6) |
| Acide lactique g/L (Fraction) | 1,98 (1) | 1,22 (0,62) |
| Glycérol g/L (Fraction) | 5,08 (1) | 3,47 (0,68) |
| Acide acétique g/L (Fraction) | 0,16 (1) | 0,04 (0,26) |
| Acide propanoïque g/L (Fraction) | 0,07 (1) | 0,05 (0,72) |
| Ethanol g/L (Fraction) | 85,89 (1) | 4,32 (0,05) |

En ce qui concerne les composés d'intérêt, c'est-à-dire les composés ayant un impact organoleptique, le vin reconstitué a conservé, par rapport au vin initial, environ 73% des sucres, 68% du glycérol et 62% de l'acide lactique, et 51% d'acide malique.

Le vin désalcoolisé a aussi conservé 70 % des acides organiques fermentaires (acide citrique, succinique et shikimique), mais seulement 26% de l'acide acétique, ce qui peut être considéré comme une amélioration de la qualité.

En ce qui concerne les éléments minéraux, (Fig. 9B) les distributions des composés dans le vin initial et dans le vin désalcoolisé reconstitué sont très proches. La part respective de chaque composé est conservée tout au long du process même si la charge minérale moyenne du vin désalcoolisé reconstitué est plus faible (71%) que celle du vin initial.

La figure 9C représente pour les 2 fractions analysées (vin rosé initial et vin rosé désalcoolisé), la répartition des contributions aromatiques par rapport au total de chaque fraction. Le profil du vin désallcoolisé est très proche (quasi superposable) à celui du vin d'origine. La part respective de chaque famille aromatique est conservée tout au long du procédé.

### Exemple 11. Procédé complet de désalcoolisation totale d'un vin rouge obtenu par macération

Toutes les fractions produites et utilisées dans cet exemple (perméat, perméat filtré, rétentat, rétentat diafiltré, ...) sont issues d'un seul lot de vin mais de plusieurs cycles différents.

Un vin rouge obtenu par macération correspond à un vin traité selon un processus de vinification qui consiste, après foulage des raisins noirs, à laisser le mout en contact avec les parties solides des raisins (pellicules, pulpe et pépins) durant la cuvaison afin d'extraire la couleur, les tanins et les arômes contenus dans ces éléments solides. La fermentation alcoolique, grâce à l'augmentation de la teneur en éthanol et de la température favorise cette extraction.

### • Etape (a) : Préparation des perméats et rétentats

### ▪ Cycle 1

136 kg de vin rouge de macération à 11,7 % vol. sont soumis aux conditions de l'étape (a) telles que décrites dans l'exemple 1 et permettent d'obtenir 119 kg de perméat à 10,2 % vol. et 12,7 kg de rétentat à 20,3 % vol.

### ▪ Cycle 2

117,3 kg de vin rouge de macération à 11,9 % vol. sont soumis aux conditions de l'étape (a) telles que décrites dans l'exemple 1 et permettent d'obtenir 102,6 kg de perméat à 9,9 % vol. et 10,5 kg de rétentat à 21,8 % vol.

### • Etape (a') : diminution du TAV du perméat

0,77620 kg du perméat à 11,05 % vol. (issus de l'étape (a) cycle 1) ont été mélangés à 0,61050 kg d'un perméat métabolisé (de TAV égal à 0 % vol.) et filtré issu d'un cycle de désalcoolisation préalable de façon à ajuster le degré d'alcool du mélange à 6,22 % vol.

### • Etape (b) : élimination de l'éthanol des perméats

La métabolisation de l'éthanol de ce perméat selon l'étape (b3) est conduite dans les conditions de l'exemple 6 à l'aide d'une souche Saccharomyces cerevisiae, commercialisée par IOC sous la dénomination IOC18-2007^{®}.

La préculture et culture de ces levures selon les étapes (b1), (b2) et (b3) est réalisée comme décrit dans les exemples 3 et 4.

0,8 kg de perméat métabolisé à 0 % vol. ont été obtenus. Après filtration de ce perméat métabolisé, on obtient 0,780 kg de perméat métabolisé filtré.

### • Etape (c) : diafiltration des rétentats

Les rétentats issus des cycles 1 et 2 sont mélangés.

Une série de diafiltrations de cet assemblage de rétentat est alors réalisée dans les conditions de l'exemple 7 afin de diminuer le TAV du rétentat pour atteindre une valeur de TAV environ égale à 4% vol.

Pour ce faire, 15,55 kg de rétentat obtenu à l'issue de l'étape (a) (cycles 1 et 2) sont diafiltrés avec 62,2 kg de perméat métabolisé filtré issu d'un cycle de désalcoolisation préalable, pour obtenir 12,65 kg de rétentat diafiltré à 3,3% vol. et 62,2 kg de perméat métabolisé diafiltré à 3,8% vol.

### Exemple 12. Procédé complet de désalcoolisation totale d'un vin rouge obtenu par thermovinification

Un vin rouge obtenu par thermovinification correspond à un vin obtenu selon un processus de vinification qui consiste à chauffer rapidement les raisins noirs foulés (de 60 à 80°C) pendant quelques minutes, puis à conduire une macération à chaud pendant quelques heures (1 à 2 heures), avant de refroidir le moût et de séparer les parties solides de la phase liquide (par pressurage, filtration, décantation...) et de réaliser la vinification en phase liquide. L'objectif est d'extraire très rapidement la couleur, les tanins et les arômes du raisin.

### • Etape (a) : Préparation du perméat et du rétentat

136 kg de vin rouge de thermovinification à 11 % vol. sont soumis aux conditions de l'étape (a) telles que décrites dans l'exemple 1 et permettent d'obtenir 119 kg de perméat à 8,5 % vol. et 11,35 kg de rétentat à 19 % vol.

### • Etape (a') : diminution du TAV des perméats

0,880 kg du perméat à 10,1 % vol. (issus de l'étape (a) cycle 1) ont été mélangés à 0,53740 kg d'un perméat métabolisé (de TAV égal à 0 % vol.) et filtré issu d'un cycle de désalcoolisation préalable de façon à ajuster le degré d'alcool du mélange à 6,21 % vol.

### • Etape (b) : élimination de l'éthanol des perméats

La métabolisation de l'éthanol de ce perméat selon l'étape (b3) est conduite dans les conditions de l'exemple 6 à l'aide d'une souche Saccharomyces cerevisiae, commercialisée par IOC sous la dénomination IOC18-2007^{®}.

La préculture et culture de ces levures selon les étapes (b1), (b2) et (b3) est réalisée comme décrit dans les exemples 3 et 4.

0,8 kg de perméat métabolisé à 0 % vol. ont été obtenus. Après filtration de ce perméat métabolisé, on obtient 0,78 kg de perméat métabolisé filtré.

### Exemple 13. Séparation physique par osmose inverse d'un vin blanc moelleux (40 g/l de sucres) en deux fractions, perméat 1 et rétentat 1 (étape a)

L'équipement d'osmose inverse est essentiellement constitué d'une pompe haute pression pouvant délivrer jusqu'à 60 bars et d'une membrane d'osmose inverse de 2,5 pouces de diamètre (Référence: Alfa Laval RO98pHt). 26 m² de membrane ont été installés.

Un schéma de l'équipement est présenté en [Fig.3].

Le vin utilisé dans cet exemple est un vin blanc moelleux, contenant 40 g/L de sucres résiduels, ayant une valeur de TAV égale à 11,5 % vol.

132 kg de vin sont introduits dans la cuve d'alimentation (1), préalablement inertée. La cuve est ensuite hermétiquement fermée, un ciel de cuve contenant moins de 2% d'O2 est maintenu par apports successifs d'azote via le détendeur (3).

Le dispositif d'alimentation est ensuite connecté hydrauliquement au dispositif d'Osmose Inverse (OI, rectangle du milieu), et le vin est pompé vers l'équipement d'OI au moyen de la pompe centrifuge (10) du dispositif d'alimentation. Puis la pompe positive (15) du dispositif d'OI est mise en marche pour faire circuler le vin au voisinage de la membrane (16), la portion de vin sortant du dispositif d'OI retournant à la cuve d'alimentation via la crépine (12), le débitmètre massique (11) et l'échangeur à plaque (7). La crépine (12) permet de retenir les cristaux de tartre apparus du fait de la concentration. Le débit mètre massique (11) permet de lire le débit mais aussi la densité, donc de suivre la concentration au fil du process. L'échangeur (7) permet de dissiper l'énergie apportée par la pompe positive (15) et de réguler ainsi la température à environ 15°C de la boucle de rétentat. La pression est obtenue en fermant progressivement la vanne pression (17), typiquement jusqu'à obtenir une pression d'environ 50 bars à l'entrée de la membrane.

Dans cet exemple, la séparation est conduite à environ 50 bars de pression maintenue en permanence côté rétentat. L'opération est poursuivie jusqu'à atteindre un FCV (Facteur de concentration volumique) de k = 3,4.

Le débit (L/h/m2) appliqué à la membrane diminue au fur et à mesure de l'écoulement du perméat. La quantité d'éthanol en masse passant dans le perméat est mesurée au cours du temps de façon instantanée avec un densimètre. Le titre éthanol / perméat (% vol.) est calculé à partir du pourcentage massique d'éthanol, en tenant compte de la densité de l'éthanol (789 g/L) c'est-à-dire en divisant le pourcentage massique d'éthanol par 0,789.

Le tableau 11 ci-dessous présente les mesures obtenues lors d'un essai avec une membrane ALFA LAVAL RO98pHt utilisée dans un procédé d'osmose inverse appliqué à un vin blanc moelleux.

**Tableau 11. Séparation physique d'un vin blanc moelleux par osmose inverse**

| Temps (min) | Perméat (Kg) | Titre Ethanol perméat (% v/v) | Titre Ethanol perméat (% v/v) | FCV (k) | Débit (L/h/m²) |
|---|---|---|---|---|---|
| 0 | | | | | |
| 15 | 1,8 | 5,1 | 4,0 | 1,01 | 2,3 |
| 60 | 8,6 | 5,8 | 4,6 | 1,07 | 1,1 |
| 120 | 16,8 | 6,3 | 5,0 | 1,14 | 1,0 |
| 160 | 21,6 | 6,6 | 5,2 | 1,19 | 0,9 |
| 240 | 30,2 | 7,0 | 5,6 | 1,29 | 0,8 |
| 300 | 36 | 7,5 | 5,9 | 1,36 | 0,7 |
| 330 | 38,6 | 7,7 | 6,1 | 1,40 | 0,7 |
| 360 | 41,2 | 7,9 | 6,2 | 1,43 | 0,7 |
| 405 | 44,8 | 8,2 | 6,5 | 1,49 | 0,6 |
| 450 | 48,2 | 8,5 | 6,7 | 1,55 | 0,6 |
| 485 | 51 | 8,7 | 6,9 | 1,60 | 0,6 |
| 510 | 52,6 | 9,0 | 7,1 | 1,63 | 0,5 |
| 570 | 56,2 | 9,3 | 7,3 | 1,70 | 0,5 |
| 645 | 60,4 | 9,8 | 7,7 | 1,80 | 0,4 |
| 690 | 62,6 | 9,9 | 7,8 | 1,85 | 0,4 |
| 780 | 66,8 | 10,5 | 8,3 | 1,97 | 0,4 |
| 840 | 68,4 | 10,8 | 8,6 | 2,01 | 0,2 |
| 910 | 71,2 | 11,2 | 8,8 | 2,10 | 0,3 |
| 973 | 74,6 | 11,5 | 9,0 | 2,21 | 0,4 |
| 1030 | 76,2 | 11,4 | 9,0 | 2,27 | 0,2 |
| 1110 | 78,8 | 11,9 | 9,4 | 2,38 | 0,2 |
| 1200 | 81,4 | 12,3 | 9,7 | 2,49 | 0,2 |
| 1295 | 83,8 | 12,7 | 10,1 | 2,61 | 0,2 |
| 1350 | 85,2 | 12,9 | 10,2 | 2,68 | 0,2 |
| 1410 | 86,6 | 13,2 | 10,4 | 2,75 | 0,2 |
| 1482 | 88,2 | 13,3 | 10,5 | 2,85 | 0,2 |
| 1540 | 89,2 | 12,4 | 9,8 | 2,91 | 0,1 |
| 1602 | 90,4 | 12,9 | 10,2 | 2,98 | 0,1 |
| 1662 | 91,4 | 13,2 | 10,4 | 3,05 | 0,1 |
| 1702 | 92 | 13,4 | 10,6 | 3,09 | 0,1 |
| 1842 | 94 | 13,6 | 10,8 | 3,24 | 0,1 |
| 1922 | 95 | 13,4 | 10,5 | 3,32 | 0,1 |
| 1977 | 95,8 | 13,6 | 10,7 | 3,38 | 0,1 |

On obtient ainsi 36 kg de rétentat et 96 kg de perméat.

Le TAV du perméat est mesuré de manière instantanée lors de son écoulement, et ne reflète donc pas le TAV final du perméat homogénéisé final, qui est de 10 % vol. On constate toutefois qu'au cours du temps, le TAV du perméat qui s'écoule augmente.

### REFERENCES BIBLIOGRAPHIQUES

FR2852493A1
FR2887258B1
US 2016/348192A1
WO 2015/114115
US 5,266,337
EP3550007
WO 2011/088809
WO 90/01537
Morales P, Rojas V, Quirós M, Gonzalez R. The impact of oxygen on the final alcohol content of wine fermented by a mixed starter culture. Appl Microbiol Biotechnol. 2015 May;99(9):3993-4003. doi: 10.1007/s00253-014-6321-3.
Gary J. Pickering (2000) Low- and Reduced-alcohol Wine: A Review. Journal of Wine Research, 11, 129-144.
Varela, C., Dry, P., Kutyna, D., Francis, I., Henschke, P., Curtin, C. and Chambers, P. (2015), Reducing alcohol concentration in wine. Australian Journal of Grape and Wine Research, 21, 670-679.
Thomas Ochando, Jean-Roch Mouret, Anne Humbert-Goffard, Jean-Marie Sablayrolles, Vincent Farines (2017). Impact of initial lipid content and oxygen supply on alcoholic fermentation in champagne-like musts. Food Research International, 98, 87-94.
Barnett, J. A., Payne, R. W., & Yarrow, D. (1990). Yeast identification program, version 2. Cambridge: Cambridge University Press. Buchanan RE, Gibbono NE (1974) Bergey's Manual of Determinative Bacteriology. Baltimore, MD: Williams & Wilkins.
Bärwald, G. et Fischer, A. (1996) Crabtree effect in aerobic fermentations using grape juice for the production of alcohol reduced wine. Biotechnology Letters 18, 1187-1192.
Box CEP, Hunter WG, Hunter JS (1978) Statistics for Experimenters. New York: Wiley, 6, 33-34.
Ishmayana, S., Kennedy, U. J., & Learmonth, R. P. (2015). Preliminary evidence of inositol supplementation effect on cell growth, viability and plasma membrane fluidity of the yeast Saccharomyces cerevisiae. Procedia Chemistry, 17, 162-169.
Ishmayana, S., Kennedy, U. J., & Learmonth, R. P. (2020) The effect of varying inositol supplementation on Saccharomyces cerevisiae grown in chemically defined media. Octa J. Bioscience. Vol 8,98-105.
Rodrigues, A.J.,Raimbourg, T., Gonzalez, R. et Morales, P. (2016) Environmental factors influencing the efficacy of different yeast strains for alcohol level reduction in wine by respiration. LWT - Food Science and Technology, 65,1038-1043

## Revendications

1. Procédé de désalcoolisation d'un volume V1 d'un vin présentant un titre alcoométrique volumique (TAV) de valeur TAV (1), comprenant la mise en œuvre des étapes suivantes :
a) Séparation du volume V1 du vin en deux fractions à l'aide d'une méthode séparative membranaire :
- Une fraction concentrée d'un facteur k dite « rétentat », le volume de cette fraction étant égal à 1/k V1, cette fraction ayant une valeur de TAV(R);
- Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) Optionnellement, diafiltration du rétentat avec du perméat métabolisé, pour obtenir :
- un « rétentat diafiltré » ayant une valeur de TAV (R diafiltré) inférieure à TAV (R), et
- un « perméat métabolisé diafiltré » ayant une valeur de TAV supérieure à TAV (P métabolisé), ledit perméat métabolisé diafiltré étant ensuite optionnellement resoumis à l'étape (b) ;
d) Association d'un volume de rétentat, optionnellement diafiltré, et d'un volume de perméat métabolisé, pour obtenir un volume V2 de vin désalcoolisé, présentant une valeur de TAV (2) inférieure à TAV (1).

2. Procédé selon la revendication 1, **caractérisé en ce que** le facteur de concentration k est compris entre 0,1 et 20, préférentiellement entre 2 et 10, plus préférentiellement entre 5 et 10.

3. Procédé selon la revendication 1 ou 2, **caractérisé en ce que** l'étape (a) est réalisée par osmose inverse ou par nanofiltration, de préférence par osmose inverse.

4. Procédé selon l'une des revendications 1 à 3, **caractérisé en ce que** l'étape (a) est réalisée par osmose inverse avec une membrane présentant un taux de rejection de sels supérieur à 0,9, de préférence supérieur à 0,95.

5. Procédé selon l'une des revendications 1 à 4, **caractérisé en ce que** l'étape (a) est réalisée à une température comprise entre 15°C et 25°C.

6. Procédé selon l'une des revendications 1 à 5, **caractérisé en ce que** l'étape (a) est réalisée sous une atmosphère principalement composée de gaz inerte et comprenant moins de 1% de dioxygène.

7. Procédé selon l'une des revendications 1 à 6, **caractérisé en ce que** le perméat est soumis à au moins une étape (a') de diminution de son TAV (P), réalisée par évaporation, par distillation, par dilution ou par contacteur membranaire.

8. Procédé selon l'une des revendications 1 à 7, **caractérisé en ce que** l'étape (b) comprend trois sous-étapes :
b1) Pré-culture d'au moins 10⁶ levures par millilitre, dans un milieu de croissance comprenant une source de sucre à une concentration comprise entre 40 et 120 g/kg, en conditions aérobies,
b2) Culture d'au moins 10⁶ levures issues de l'étape (b1) par millilitre, dans un milieu de croissance comprenant une source de sucre à une concentration comprise entre 40 et 120 g/kg, en conditions aérobies, le volume de culture étant identique au volume de perméat à traiter à l'étape suivante,
b3) Addition d'au moins 2.10⁸ levures par millilitre au perméat à traiter, et métabolisation de l'éthanol par les levures en conditions aérobies.

9. Procédé selon la revendication 8, **caractérisé en ce que** l'étape (b3) de métabolisation de l'éthanol par des levures en état respiratoire est réalisée sous un débit de dioxygène compris entre 0,001 et 0,010 volume par volume par minute (vvm), préférentiellement entre 0,002 et 0,008 vvm.

10. Procédé selon l'une des revendications 1 à 9, **caractérisé en ce que** les levures additionnées au perméat à l'étape (b) sont du genre Saccharomyces, de préférence de l'espèce Saccharomyces cerevisiae.

11. Procédé de désalcoolisation partielle d'un volume V1 de vin selon l'une des revendications 1 à 10, comprenant la mise en œuvre des étapes suivantes :
a) Séparation du volume V1 du vin en deux fractions à l'aide d'une méthode séparative membranaire :
- Une fraction concentrée d'un facteur k dite « rétentat », le volume de cette fraction étant égal à 1/k V1, cette fraction ayant une valeur de TAV(R);
- Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P); et
d) Association d'un volume de rétentat et d'un volume de perméat métabolisé, pour obtenir un volume V2 de vin désalcoolisé de, présentant une valeur de TAV (2) inférieure à TAV (1).

12. Procédé de désalcoolisation totale d'un volume V1 de vin selon l'une des revendications 1 à 10, comprenant la mise en œuvre des étapes suivantes :
a) Séparation du volume V1 du vin en deux fractions à l'aide d'une méthode séparative membranaire :
- Une fraction concentrée d'un facteur k dite « rétentat », le volume de cette fraction étant égal à 1/k V1, cette fraction ayant une valeur de TAV(R);
- Une fraction dite « perméat » comprenant majoritairement de l'eau et de l'éthanol, le volume de cette fraction étant égal à (k-1)/k V1, cette fraction ayant une valeur de TAV(P);
b) Elimination de l'éthanol du perméat par des levures additionnées audit perméat, lesdites levures étant en état respiratoire afin de métaboliser l'éthanol, la fraction ainsi obtenue dite « perméat métabolisé » ayant une valeur de TAV (P métabolisé) inférieure à TAV (P);
c) diafiltration du rétentat avec du perméat métabolisé ayant un TAV de valeur égale à 0% vol., pour obtenir :
- un « rétentat diafiltré » ayant une valeur de TAV (R diafiltré) inférieure à TAV (R), et
- un « perméat métabolisé diafiltré » ayant une valeur de TAV supérieure à TAV (P métabolisé), ledit perméat métabolisé diafiltré étant ensuite resoumis à l'étape (b) jusqu'à obtention d'un TAV de valeur inférieure ou égale à 0,5% vol., de préférence égale à 0% vol. ;
d) Association d'un volume de rétentat diafiltré, et d'un volume de perméat métabolisé ayant une valeur de TAV inférieure ou égale à 0,5% vol., de préférence égale à 0% vol., pour obtenir un volume V2 de vin désalcoolisé présentant une valeur de TAV (2) inférieure ou égale à 0,5% vol.

13. Procédé selon l'une des revendications 1 à 12, **caractérisé en ce que** l'étape (d) d'association des deux fractions constituant le volume V2 de vin désalcoolisé est réalisée selon les proportions suivantes :
- le volume du perméat métabolisé est égal à (k-1)/k V2 ; et
- le volume du rétentat, optionnellement diafiltré, est égal à 1/k V2.

## Patentansprüche

1. Verfahren zur Entalkoholisierung eines Volumens V1 eines Weins, der einen Alkoholgehalt (TAV) mit dem Wert TAV (1) aufweist, umfassend das Durchführen der folgenden Schritte:
a) Trennen des Volumens V1 des Weins in zwei Fraktionen mittels einer Membran-Trennmethode in:
- eine konzentrierte Fraktion mit einem Faktor k, die "Retentat" genannt wird, wobei das Volumen dieser Fraktion gleich 1/k V1 ist, wobei diese Fraktion einen Wert TAV(R) aufweist;
- eine Fraktion, die "Permeat" genannt wird, die hauptsächlich Wasser und Ethanol umfasst, wobei das Volumen dieser Fraktion gleich (k-1)/k V1 ist, wobei diese Fraktion einen Wert TAV(P) aufweist;
b) Beseitigen des Ethanols von dem Permeat durch dem Permeat beigemengte Hefen, wobei die Hefen sich im respiratorischen Zustand befinden, um den Ethanol zu metabolisieren, wobei die so erhaltene Fraktion, die "metabolisiertes Permeat" genannt wird, einen Wert TAV (P metabolisiert) von kleiner als TAV (P) aufweist;
c) wahlweise Diafiltrieren des Retentats mit metabolisiertem Permeat, um Folgendes zu erhalten:
- ein "diafiltriertes Retentat", das einen Wert TAV (R diafiltriert) von kleiner als TAV (R) aufweist, und
- ein "diafiltriertes metabolisiertes Permeat", das einen Wert TAV aufweist, der größer als TAV (P metabolisiert) ist, wobei das diafiltrierte metabolisierte Permeat anschließend wahlweise erneut dem Schritt (b) unterzogen wird;
d) Verbinden eines Volumens an wahlweise diafiltriertem Retentat und eines Volumens an metabolisiertem Permeat, um ein Volumen V2 an entalkoholisiertem Wein zu erhalten, der einen Wert von TAV (2) aufweist, der kleiner als TAV (1) ist.

2. Verfahren nach Anspruch 1, **dadurch gekennzeichnet, dass** der Konzentrationsfaktor k zwischen 0,1 und 20, vorzugsweise zwischen 2 und 10, bevorzugter zwischen 5 und 10, beträgt.

3. Verfahren nach Anspruch 1 oder 2, **dadurch gekennzeichnet, dass** der Schritt (a) durch Umkehrosmose oder durch Nanofiltration, vorzugsweise durch Umkehrosmose, ausgeführt wird.

4. Verfahren nach einem der Ansprüche 1 bis 3, **dadurch gekennzeichnet, dass** der Schritt (a) durch Umkehrosmose mit einer Membran ausgeführt wird, die eine Salzabweisungsrate von größer als 0,9, vorzugsweise größer als 0,95, aufweist.

5. Verfahren nach einem der Ansprüche 1 bis 4, **dadurch gekennzeichnet, dass** der Schritt (a) bei einer Temperatur zwischen 15 °C und 25 °C ausgeführt wird.

6. Verfahren nach einem der Ansprüche 1 bis 5, **dadurch gekennzeichnet, dass** der Schritt (a) unter einer Atmosphäre ausgeführt wird, die hauptsächlich aus Inertgas besteht und weniger als 1 % Disauerstoff umfasst.

7. Verfahren nach einem der Ansprüche 1 bis 6, **dadurch gekennzeichnet, dass** das Permeat mindestens einem Schritt (a') der Verminderung seines TAV (P) unterzogen wird, die durch Verdampfung, durch Destillation, durch Verdünnung oder durch Membrankontaktor ausgeführt wird.

8. Verfahren nach einem der Ansprüche 1 bis 7, **dadurch gekennzeichnet, dass** der Schritt (b) drei Teilschritte umfasst:
b1) Vorkultur von mindestens 10⁶ Hefen pro Millimeter in einem Wachstumsmedium, das eine Zuckerquelle mit einer Konzentration zwischen 40 und 120 g/kg umfasst, unter aerobischen Bedingungen,
b2) Kultur von mindestens 10⁶ Hefen aus dem Schritt (b1) pro Millimeter in einem Wachstumsmedium, das eine Zuckerquelle mit einer Konzentration zwischen 40 und 120 g/kg umfasst, unter aerobischen Bedingungen, wobei das Kulturvolumen identisch mit dem im folgenden Schritt zu behandelnden Volumen an Permeat ist,
b3) Beimengen von mindestens 2,10⁸ Hefen pro Millimeter zu dem zu behandelnden Permeat und Metabolisieren des Ethanols durch die Hefen unter aerobischen Bedingungen.

9. Verfahren nach Anspruch 8, **dadurch gekennzeichnet, dass** der Schritt (b3) des Metabolisierens des Ethanols durch Hefen im respiratorischen Zustand unter einem Sauerstoffdurchfluss zwischen 0,001 und 0,010 Volumen pro Volumen pro Minute (vvm), vorzugsweise zwischen 0,002 und 0,008 vvm, ausgeführt wird.

10. Verfahren nach einem der Ansprüche 1 bis 9, **dadurch gekennzeichnet, dass** die dem Permeat im Schritt (b) beigemengten Hefen von der Gattung Saccharomyces, vorzugsweise von der Art Saccharomyces cerevisiae, sind.

11. Verfahren zur partiellen Entalkoholisierung eines Volumens V1 an Wein nach einem der Ansprüche 1 bis 10, umfassend das Durchführen der folgenden Schritte:
a) Trennen des Volumens V1 des Weins in zwei Fraktionen mittels einer Membran-Trennmethode in:
- eine konzentrierte Fraktion mit einem Faktor k, die "Retentat" genannt wird, wobei das Volumen dieser Fraktion gleich 1/k V1 ist, wobei diese Fraktion einen Wert TAV(R) aufweist;
- eine Fraktion, die "Permeat" genannt wird, die hauptsächlich Wasser und Ethanol umfasst, wobei das Volumen dieser Fraktion gleich (k-1)/k V1 ist, wobei diese Fraktion einen Wert TAV(P) aufweist;
b) Beseitigen des Ethanols von dem Permeat durch dem Permeat beigemengte Hefen, wobei die Hefen sich im respiratorischen Zustand befinden, um den Ethanol zu metabolisieren, wobei die so erhaltene Fraktion, die "metabolisiertes Permeat" genannt wird, einen Wert TAV (P metabolisiert) von kleiner als TAV (P) aufweist; und
d) Verbinden eines Volumens an Retentat und eines Volumens an metabolisiertem Permeat, um ein Volumen V2 an entalkoholisiertem Wein zu erhalten, der einen Wert von TAV (2) aufweist, der kleiner als TAV (1) ist.

12. Verfahren zur vollständigen Entalkoholisierung eines Volumens V1 an Wein nach einem der Ansprüche 1 bis 10, umfassend das Durchführen der folgenden Schritte:
a) Trennen des Volumens V1 des Weins in zwei Fraktionen mittels einer Membran-Trennmethode in:
- eine konzentrierte Fraktion mit einem Faktor k, die "Retentat" genannt wird, wobei das Volumen dieser Fraktion gleich 1/k V1 ist, wobei diese Fraktion einen Wert TAV(R) aufweist;
- eine Fraktion, die "Permeat" genannt wird, die hauptsächlich Wasser und Ethanol umfasst, wobei das Volumen dieser Fraktion gleich (k-1)/k V1 ist, wobei diese Fraktion einen Wert TAV(P) aufweist;
b) Beseitigen des Ethanols von dem Permeat durch dem Permeat beigemengte Hefen, wobei die Hefen sich im respiratorischen Zustand befinden, um den Ethanol zu metabolisieren, wobei die so erhaltene Fraktion, die "metabolisiertes Permeat" genannt wird, einen Wert TAV (P metabolisiert) von kleiner als TAV (P) aufweist;
c) Diafiltrieren des Retentats mit metabolisiertem Permeat, das einen TAV mit einem Wert gleich 0 Vol.-% aufweist, um Folgendes zu erhalten:
- ein "diafiltriertes Retentat", das einen Wert TAV (R diafiltiert) von kleiner als TAV (R) aufweist, und
- ein "diafiltriertes metabolisiertes Permeat", das einen Wert TAV aufweist, der größer als (P metabolisiert) ist, wobei das diafiltrierte metabolisierte Permeat anschließend erneut dem Schritt (b) bis zum Erhalt eines TAV mit einem Wert von kleiner oder gleich 0,5 Vol.-%, vorzugsweise gleich 0 Vol.-%, unterzogen wird;
d) Verbinden eines Volumens an diafiltriertem Retentat und eines Volumens an metabolisiertem Permeat, das einen TAV-Wert von kleiner oder gleich 0,5 Vol.-%, vorzugsweise gleich 0 Vol.-%, aufweist, um ein Volumen V2 an entalkoholisiertem Wein zu erhalten, der einen Wert von TAV (2) aufweist, der kleiner oder gleich 0,5 Vol.-% ist.

13. Verfahren nach einem der Ansprüche 1 bis 12, **dadurch gekennzeichnet, dass** der Schritt (d) des Verbindens der zwei Fraktionen, die das Volumen V2 an entalkoholisiertem Wein bilden, gemäß den folgenden Anteilen ausgeführt wird:
- das Volumen des metabolisierten Permeats ist gleich (k-1)/k V2; und
- das Volumen des wahlweise diafiltrierten Retentats ist gleich 1/k V2.

## Claims

1. A process for dealcoholisation of a volume V1 of a wine having a percentage of alcohol by volume (ABV) of value ABV(1), comprising implementation of the following steps:
a) separating the volume V1 of the wine into two fractions using a membrane separation process:
- one fraction concentrated by a factor k referred to as "retentate", the volume of this fraction being equal to 1/k V1, this fraction having a value ABV(R);
- one fraction referred to as "permeate" comprising predominantly water and ethanol, the volume of this fraction being equal to (k-1)/k V1, this fraction having a value ABV(P);
b) removing the ethanol from the permeate by yeasts added to said permeate, said yeasts being in respiratory state in order to metabolise the ethanol, the resulting fraction being referred to as "metabolised permeate" having a value ABV(P metabolised) less than ABV(P);
c) optionally, diafiltrating the retentate with the metabolised permeate, in order to obtain:
- a "diafiltered retentate" having a value ABV(R diafiltered) less than ABV(R), and
- a "diafiltered metabolised permeate" having an ABV value greater than ABV(P metabolised), said diafiltered metabolised permeate then being optionally subjected again to step (b);
d) combining a volume of retentate or of diafiltered retentate and a volume of metabolised permeate, in order to obtain a volume V2 of dealcoholised wine, having a value ABV(2) less than ABV(1).

2. The process according to claim 1, **characterised in that** the concentration factor k is between 0.1 and 20, preferably between 2 and 10, more preferably between 5 and 10.

3. The process according to claim 1 or 2, **characterised in that** step (a) is carried out by reverse osmosis or by nanofiltration, preferably by reverse osmosis.

4. The process according to one of claims 1 to 3, **characterised in that** step (a) is carried out by reverse osmosis with a membrane having a rejection rate for salts greater than 0.9, preferably greater than 0.95.

5. The process according to one of claims 1 to 4, **characterised in that** step (a) is carried out at a temperature between 15°C and 25°C.

6. The process according to one of claims 1 to 5, **characterised in that** step (a) is carried under an atmosphere mainly composed of inert gas comprising less than 1% molecular oxygen.

7. The process according to one of claims 1 to 6, **characterised in that** the permeate is subjected to at least one step (a') of reducing its ABV(P), carried out by evaporation, distillation, dilution or membrane contractor.

8. The process according to one of claims 1 to 7, **characterised in that** step (b) comprises three substeps:
b1) pre-culturing of at least 10⁶ yeasts per millilitre, in a growth medium comprising a source of sugar at a concentration between 40 and 120 g/kg, under aerobic conditions,
b2) culturing at least 10⁶ yeasts resulting from step (b1) per millilitre, in a growth medium comprising a source of sugar at a concentration between 40 and 120 g/kg, under aerobic conditions, the volume of culture being identical to the volume of permeate to be treated in the following substep,
b3) adding at least 2.10⁸ yeasts per millilitre to the permeate to be treated, and metabolisation of the ethanol by the yeasts under aerobic conditions.

9. The process according to claim 8, **characterised in that** step (b3) of metabolisation of the ethanol by yeasts in respiratory state is carried out under a flow of molecular oxygen between 0.001 and 0.010 volume per volume per minute (vvm), preferably between 0.002 and 0.008 vvm.

10. The process according to one of claims 1 to 9, **characterised in that** the yeasts added to the permeate in step (b) are of the genus Saccharomyces, preferably of the species Saccharomyces cerevisiae.

11. A process for partial dealcoholisation of a volume V1 of wine according to one of claims 1 to 10, comprising the implementation of the following steps:
a) separating the volume V1 of the wine into two fractions using a membrane separation process:
- one fraction concentrated by a factor k referred to as "retentate", the volume of this fraction being equal to 1/k V1, this fraction having a value ABV(R);
- one fraction referred to as "permeate" comprising predominantly water and ethanol, the volume of this fraction being equal to (k-1)/k V1, this fraction having a value ABV(P);
b) removing the ethanol from the permeate by yeasts added to said permeate, said yeasts being in the respiratory state in order to metabolise the ethanol, the resulting fraction referred to as "metabolised permeate" having a value ABV(P metabolised) less than ABV(P); and
d) combining a volume of retentate and a volume of metabolised permeate, in order to obtain a volume V2 of dealcoholised wine having a value ABV(2) less than ABV(1).

12. A process for total dealcoholisation of a volume V1 of wine according to one of claims 1 to 10, comprising the implementation of the following steps:
a) separating the volume V1 of the wine into two fractions using a membrane separation process:
- one fraction concentrated by a factor k referred to as "retentate", the volume of this fraction being equal to 1/k V1, this fraction having a value ABV(R);
- one fraction referred to as "permeate" comprising predominantly water and ethanol, the volume of this fraction being equal to (k-1)/k V1, this fraction having a value ABV(P);
b) removing the ethanol from the permeate by yeasts added to said permeate, said yeasts being in respiratory state in order to metabolise the ethanol, the resulting fraction being referred to as "metabolised permeate" having a value ABV(P metabolised) less than ABV(P);
c) diafiltrating the retentate with the metabolised permeate having an ABV value equal to 0 vol.%, in order to obtain:
- a "diafiltered retentate" having a value ABV(R diafiltered) less than ABV(R), and
- a "diafiltered metabolised permeate" having an ABV value greater than ABV(P metabolised), said diafiltered metabolised permeate then being subjected again to step (b) until obtaining an ABV value less than or equal to 0.5 vol.%, preferably equal to 0 vol.% ;
d) combining a volume of diafiltered retentate, and a volume of metabolised permeate having an ABV value less than or equal to 0.5 vol.%, preferably equal to 0 vol.%, in order to obtain a volume V2 of dealcoholised wine having a value ABV(2) less than or equal to 0.5 vol.%.

13. The process according to one of claims 1 to 12, **characterised in that** step (d) of combining the two fractions constituting the volume V2 of dealcoholised wine is carried out according to the following proportions:
- the volume of the metabolised permeate is equal to (k-1)/k V2; and
- the volume of the retentate or diafiltered retentate is equal to 1/k V2.
